(19) Europäisches Patentamt / European Patent Office / Office européen des brevets

(11) **EP 2 752 772 A1**

(12) **EUROPEAN PATENT APPLICATION**
published in accordance with Art. 153(4) EPC

(43) Date of publication:
**09.07.2014 Bulletin 2014/28**

(51) Int Cl.:
**G06F 13/00** (2006.01)   **H04N 7/173** (2011.01)

(21) Application number: **12834074.2**

(86) International application number:
**PCT/JP2012/074150**

(22) Date of filing: **21.09.2012**

(87) International publication number:
**WO 2013/042758 (28.03.2013 Gazette 2013/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2011   JP 2011205465**
**21.09.2011   JP 2011205466**

(71) Applicant: **NEC Corporation**
**Tokyo 108-8001 (JP)**

(72) Inventor: **OZAWA, Kazunori**
**Tokyo 108-8001 (JP)**

(74) Representative: **Glawe, Delfs, Moll**
**Partnerschaft mbB von**
**Patent- und Rechtsanwälten**
**Postfach 26 01 62**
**80058 München (DE)**

(54) **CONTENTS DISTRIBUTION SYSTEM, CACHE SERVER, AND CONTENTS DISTRIBUTION METHOD**

(57)   A cache server includes an accumulation unit that accumulates a content(s) stored in a delivery server apparatus. The cache server, by using information included in a request message from a mobile terminal, determines which one of the cache servers arranged on a mobile network accumulates a content requested by the mobile terminal. The cache server reads a file corresponding to the requested content from the determined cache server and outputs the file to the accumulation unit. In addition, the cache server estimates a bandwidth of the mobile network based on a signal from the mobile terminal, reads the file corresponding to the requested content from the accumulation unit, and extracts a stream from the file. The cache server generates a stream by deleting at least part of frames from the stream so that a bit rate of the generated stream does not exceed the band. The cache server stores the generated stream in a packet and transmits the packet to the mobile terminal.

FIG. 1

**Description**

FIELD

[REFERENCE TO RELATED APPLICATION]

The present invention is based upon and claims the benefit of the priority of Japanese patent application No. 2011-205465, filed on September 21, 2011, and of Japanese patent application No. 2011-205466, filed on September 21, 2011. The disclosures of these applications are incorporated herein in their entirety by reference thereto.

The present invention relates to a content delivery system, a cache server, and a content delivery method. In particular, it relates to: a content delivery system in which a moving image content is cached on a mobile network and the content is delivered to various terminals (such as mobile phones, smartphones, PCs (Personal Computers), and game machines); a cache server; and a content delivery method.

BACKGROUND

It is predicted that the speed and capacity of mobile networks will be increased further through techniques such as LTE (Long Term Evolution) and EPC (Evolved Packet Core). With such advancement, it is predicted that content delivery will be in widespread use in the future. In content delivery, contents are delivered to various terminals such as mobile terminals via mobile networks.

For example, PTL 1 discloses a content delivery method. According to PTL 1, a plurality of cache servers are caused to temporarily store contents stored in a content server connected to the Internet and to deliver contents to an unspecified large number of client terminals.

In addition, PTL 2 discloses a moving image delivery system for causing a server to deliver video data to clients. According to PTL 2, to enable clients to perform high-quality reproduction of video data, the clients deliver performance information representing performance thereof to the server.

CITATION LIST

PATENT LITERATURE

[PTL 1]
Japanese Patent Kokai Publication No. 2006-171822A
[PTL 2]
Japanese Patent Kokai Publication No. 2000-122951A

SUMMARY

TECHNICAL PROBLEM

The entire disclosure of each of the above PTLs is incorporated herein by reference thereto. The following analysis has been made by the present inventor.

It is predicted that the amount of data system traffic on mobile networks will be increased eight to ten times as large as the current amount by 2013 and that video contents will account for most of the data system traffic. In addition, as smartphones spread rapidly and terminal capabilities improve further, sizes of video contents are increasing more and more. Accordingly, it is predicted that hi-definition, large-capacity contents will also be delivered on mobile networks in the near future.

However, in conventional content delivery systems, when contents on the Internet are delivered via a mobile network, all the content requests from terminals are transmitted to a delivery server apparatus on the Internet via packet forwarding apparatuses. In addition, the delivery server apparatus delivers the contents to all the terminals via the packet forwarding apparatuses.

However, such content delivery system has the following problems.

The bandwidth (throughput) of a mobile network changes with time, depending on the traffic amount. However, in the conventional content delivery systems, when a moving image content on the Internet is delivered, the content of a certain bit rate is continuously delivered, regardless of the above change. Thus, if the bandwidth continuously falls below the delivery bit rate, the content cannot be delivered. As a result, when data buffered in the client is depleted, various problems such as freeze-up of the moving image or interruption of voice are caused during reproduction. If these phenomena are caused, QoE (Quality of Experience) of the viewer is significantly deteriorated.

In addition, in the conventional content delivery systems, future data that is not currently needed by the viewer for viewing is also delivered. Thus, if the viewer stops viewing the content, data that has already been delivered and that has not been reproduced yet is wasted, counted as a problem. Namely, the conventional content delivery systems have a problem that the limited bandwidth of a mobile network is needlessly consumed.

Thus, there is a demand for a technique to prevent deterioration of user QoE even when the bandwidth of a mobile network is changed when a content is delivered via the mobile network. An object of the present invention is to provide a content delivery system, a cache server, and a content delivery method that satisfy the demand.

SOLUTION TO PROBLEM

According to a first aspect of the present invention, there is provided a content delivery system, comprising:

a plurality of cache servers on a mobile network;
wherein each of the plurality of cache servers comprises:

a temporary content accumulation unit that temporarily accumulates at least part of contents stored in a delivery server apparatus delivering a content(s) on the Internet;
a determination unit that by using information included in a content request message from a mobile terminal determines which one of the plurality of cache servers accumulates a content requested by the mobile terminal;
a content acquisition unit that reads a file corresponding to the requested content from the determined cache server and outputs the file to the temporary content accumulation unit; and
a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a packet, and transmits the packet to the mobile terminal.

According to a second aspect of the present invention, there is provided a cache server, comprising:

a temporary content accumulation unit that temporarily accumulates at least part of contents stored in a delivery server apparatus delivering a content(s) on the Internet;
a determination unit that by using information included in a content request message from a mobile terminal determines which one of the plurality of cache servers on a mobile network accumulates a content requested by the mobile terminal;
a content acquisition unit that reads a file corresponding to the requested content from the determined cache server and outputs the file to the temporary content accumulation unit; and
a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a packet, and transmits the packet to the mobile terminal.

According to a third aspect of the present invention, there is provided a content delivery method, comprising:

by a cache server, temporarily accumulating at least part of contents stored in a delivery server apparatus delivering a content(s) on the Internet in a temporary content accumulation unit provided with the cache server;
by using information included in a content request message from a mobile terminal, determining which one of the plurality of cache servers on a mobile network accumulates a content requested by the mobile terminal;
reading a file corresponding to the requested content from the determined cache server and outputting the file to the temporary content accumulation unit;
estimating a bandwidth of the mobile network based on a predetermined signal from the mobile terminal;
reading the file corresponding to the requested content from the temporary content accumulation unit; and
extracting a stream from the read file, generating a stream by deleting at least part of frames from the stream so that a bit rate of the generated stream does not exceed the bandwidth, storing the generated stream in a packet, and transmitting the packet to the mobile terminal.

According to a fourth aspect of the present invention, there is provided a content delivery system comprising a plurality of cache servers on a mobile network; wherein each of the plurality of cache servers comprises:

a temporary content accumulation unit that temporarily accumulates at least part of contents stored in a delivery server apparatus delivering a content(s) on the Internet;

a determination unit that by using information included in a content request message from a mobile terminal determines which one of the plurality of cache servers accumulates a content requested by the mobile terminal;

a content acquisition unit that reads a file corresponding to the requested content from the determined cache server and outputs the file to the temporary content accumulation unit; and

a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a file, and transmits a packet including the file storing the adjusted stream to the mobile terminal while controlling transmission timing based on a buffer capacity of the mobile terminal at least for a certain period.

According to a fifth aspect of the present invention, there is provided a cache server comprising:

a temporary content accumulation unit that temporarily accumulates at least part of contents stored in a delivery server apparatus delivering a content(s) on the Internet;

a determination unit that by using information included in a content request message from a mobile terminal determines which one of the plurality of cache servers on a mobile network accumulates a content requested by the mobile terminal;

a content acquisition unit that reads a file corresponding to the requested content from the determined cache server and outputs the file to the temporary content accumulation unit; and

a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the stream in a file, and transmits a packet including the file storing the adjusted stream to the mobile terminal while controlling transmission timing based on a buffer capacity of the mobile terminal at least for a certain period.

According to a sixth aspect of the present invention, there is provided a content delivery method comprising:

by a cache server, temporarily accumulating at least part of contents stored in a delivery server apparatus delivering a content(s) on the Internet in a temporary content accumulation unit provided with the cache server;

by using information included in a content request message from a mobile terminal, determining which one of the plurality of cache servers on a mobile network accumulates a content requested by the mobile terminal;

reading a file corresponding to the requested content from the determined cache server and outputting the file to the temporary content accumulation unit;

estimating a bandwidth of the mobile network based on a predetermined signal from the mobile terminal;

reading the file corresponding to the requested content from the temporary content accumulation unit;

extracting a stream from the read file, generate a stream by deleting at least part of frames from the stream so that a bit rate of the generated stream does not exceed the bandwidth, and storing the generated stream in a file; and

transmitting a packet including the file storing the adjusted stream to the mobile terminal while controlling transmission timing based on a buffer capacity of the mobile terminal at least for a certain period.

ADVANTAGEOUS EFFECTS OF INVENTION

With a content delivery system, a cache server, and a content delivery method according to the present invention, it is possible to prevent deterioration of user QoE even when the bandwidth of a mobile network is changed when a content is delivered via the mobile network.

BRIEF DESCRIPTION OF DRAWINGS

[Fig. 1]

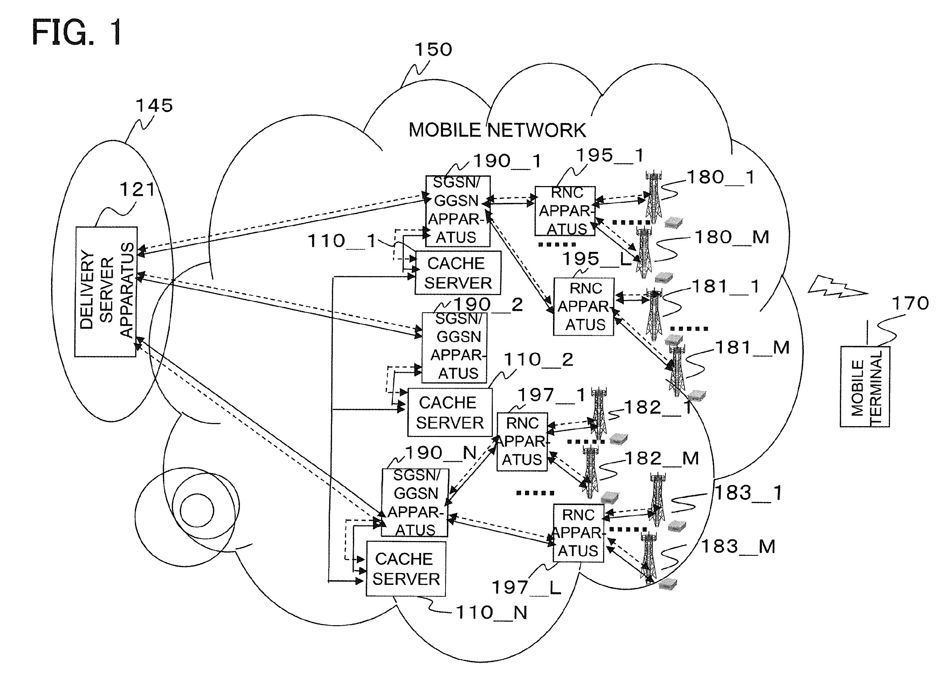

Fig. 1 is a block diagram illustrating a configuration of a content delivery system according to a first exemplary embodiment.

[Fig. 2]

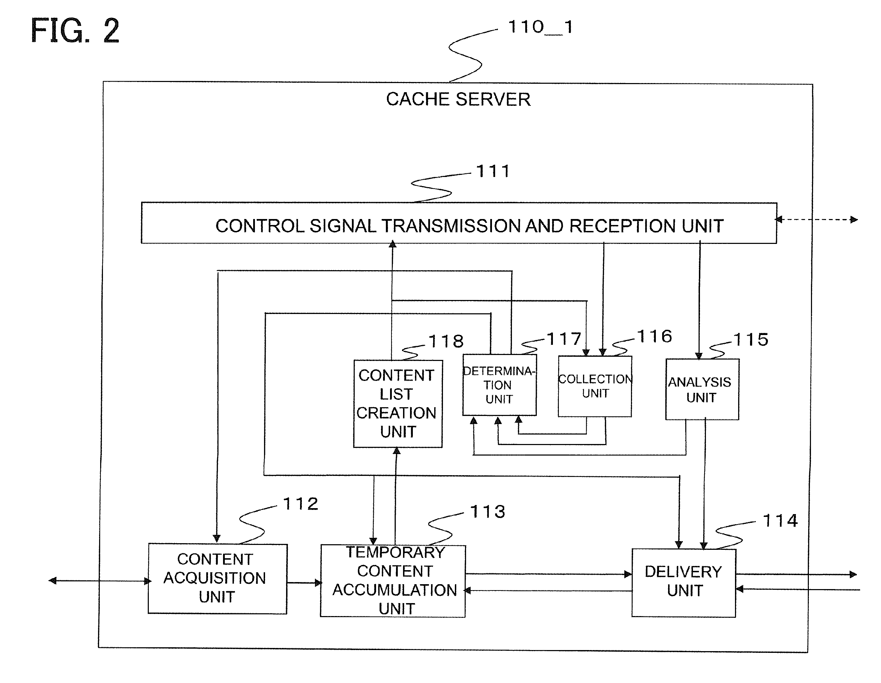

Fig. 2 is a block diagram illustrating a configuration of a cache server in the content delivery system according to the first exemplary embodiment.

[Fig. 3]

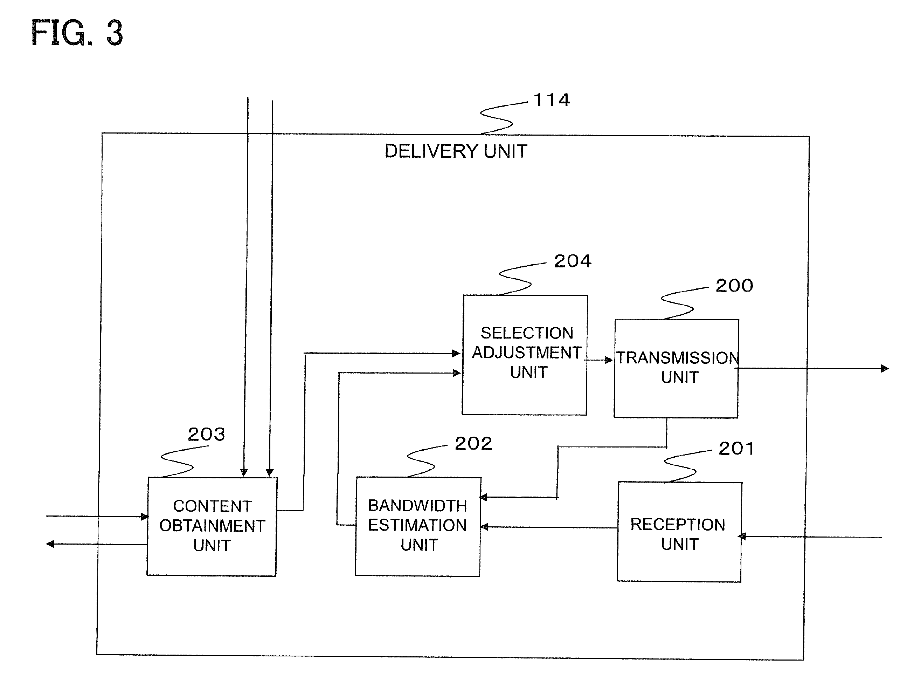

Fig. 3 is a block diagram illustrating a configuration of a delivery unit of the cache server in the content delivery system according to the first exemplary embodiment.

[Fig. 4]

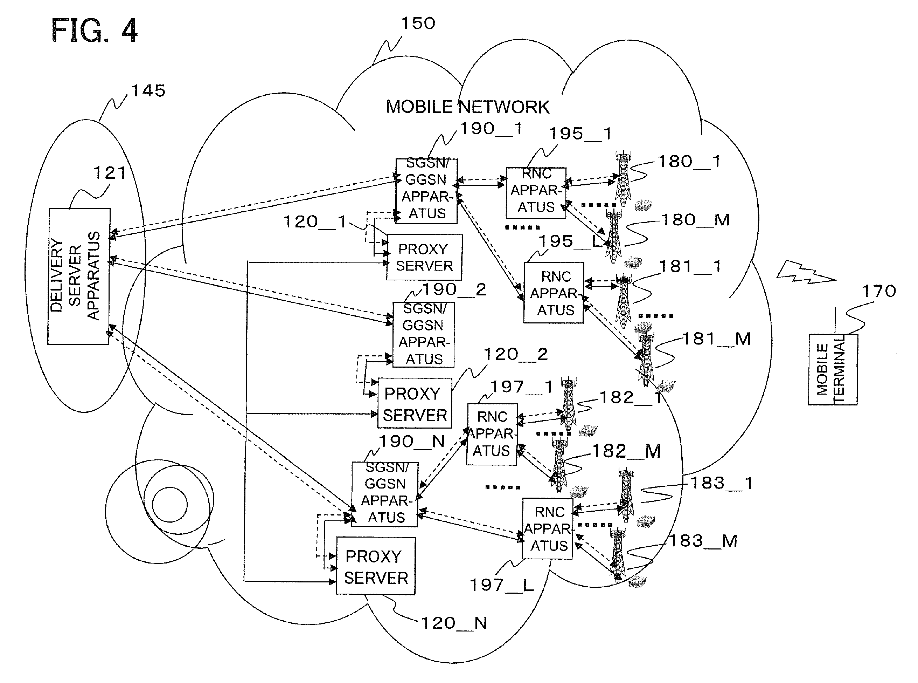

Fig. 4 is a block diagram illustrating a configuration of a content delivery system according to a second exemplary embodiment.

[Fig. 5]

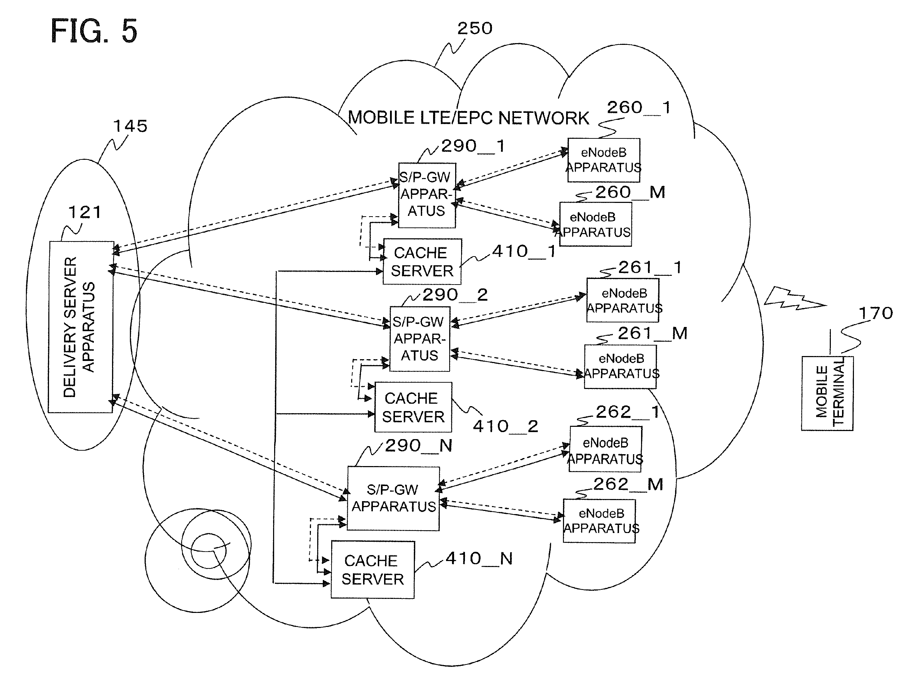

Fig. 5 is a block diagram illustrating a configuration of a content delivery system according to a third exemplary embodiment.

[Fig. 6]

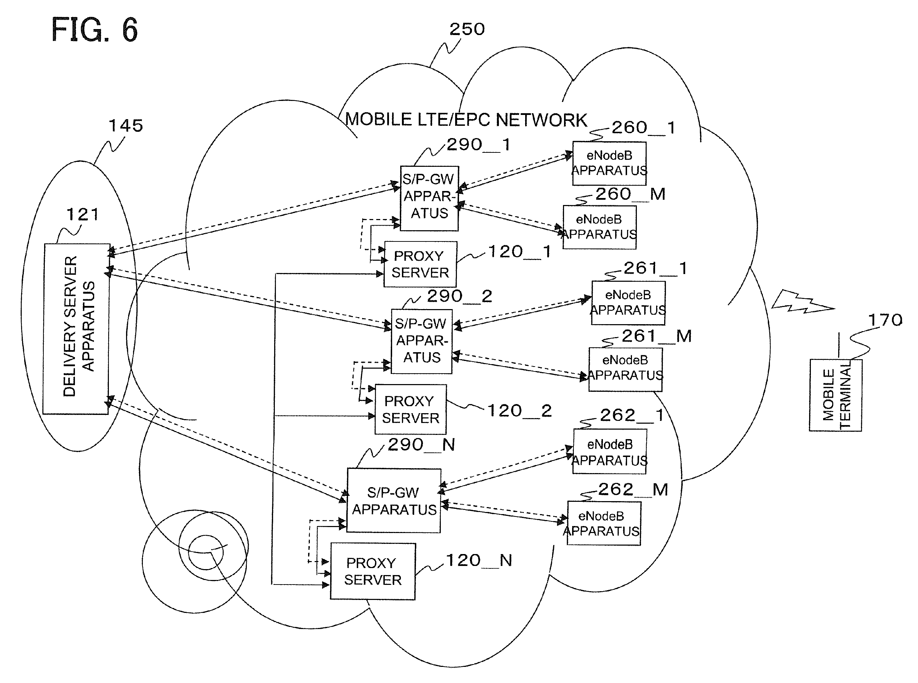

Fig. 6 is a block diagram illustrating a configuration of a content delivery system according to a fourth exemplary embodiment.

[Fig. 7]

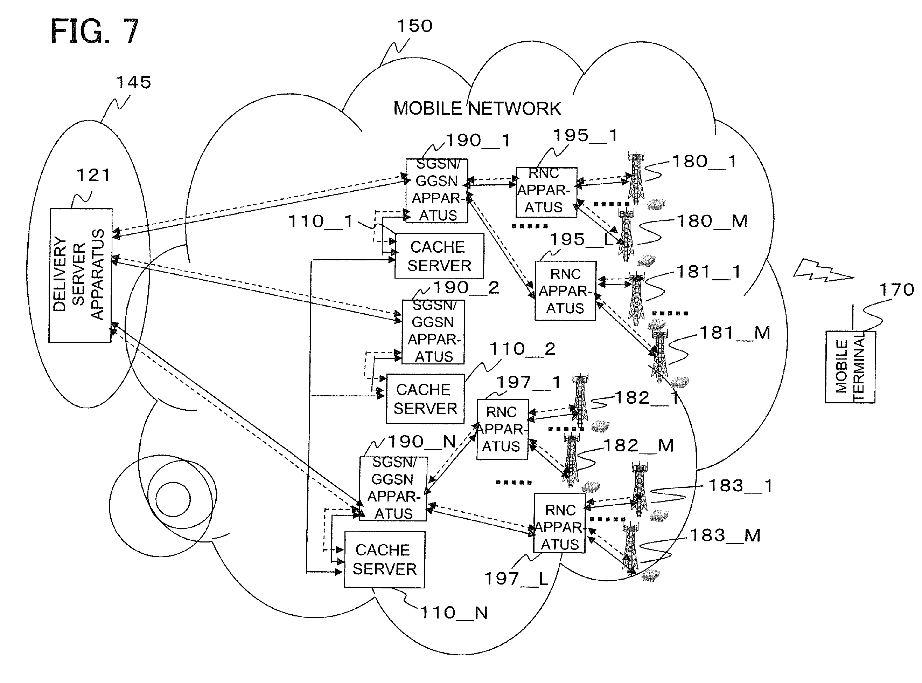

Fig. 7 is a block diagram illustrating a configuration of a content delivery system according to a fifth exemplary embodiment.

[Fig. 8]

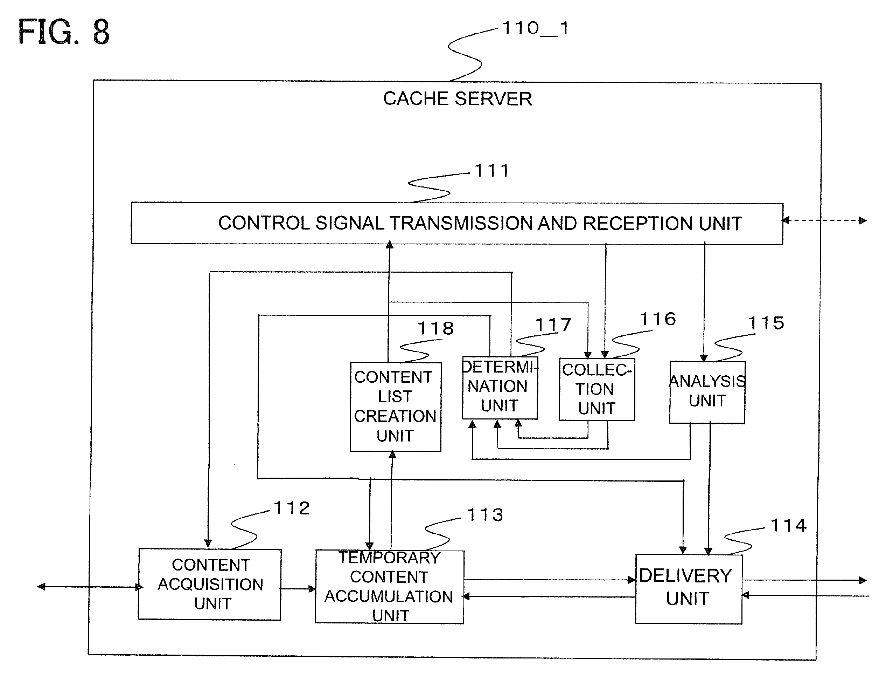

Fig. 8 is a block diagram illustrating a configuration of a cache server in the content delivery system according to the fifth exemplary embodiment.

[Fig. 9]

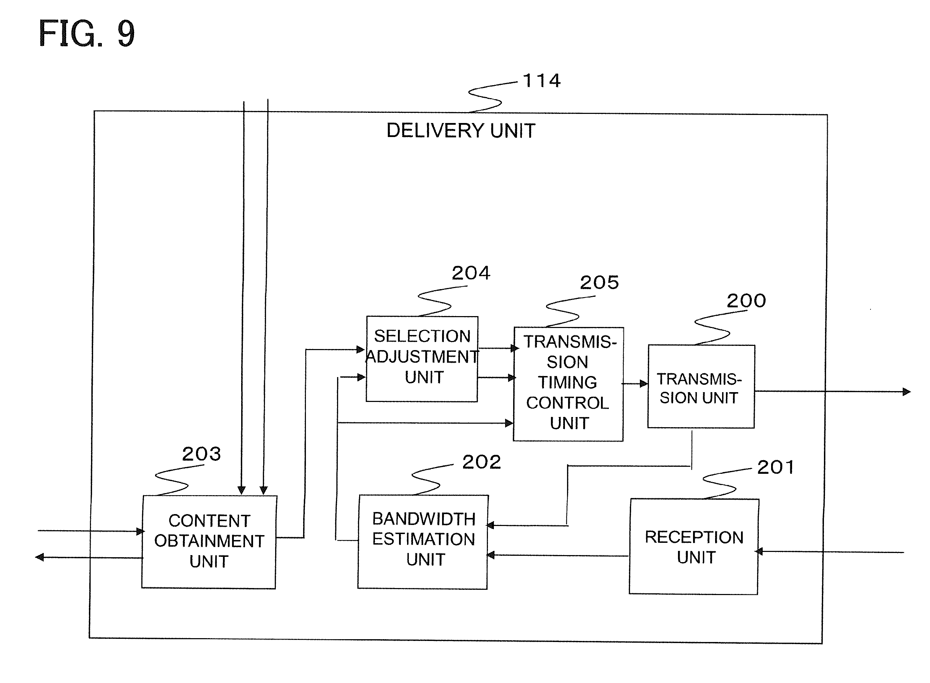

Fig. 9 is a block diagram illustrating a configuration of a delivery unit of the cache server in the content delivery system according to the fifth exemplary embodiment.

[Fig. 10]

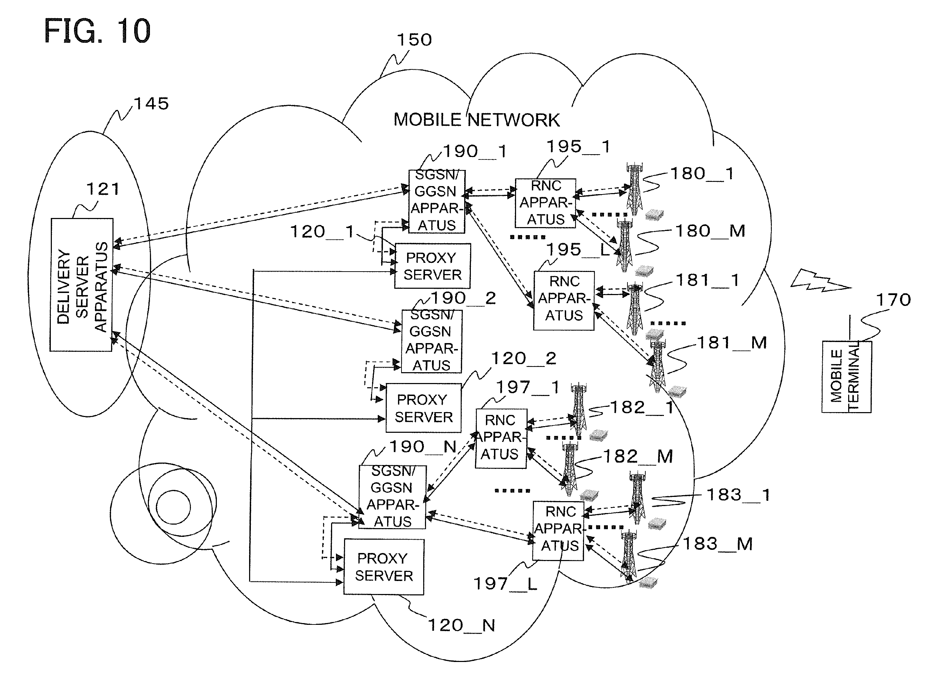

Fig. 10 is a block diagram illustrating a configuration of a content delivery system according to a sixth exemplary embodiment.

[Fig. 11]

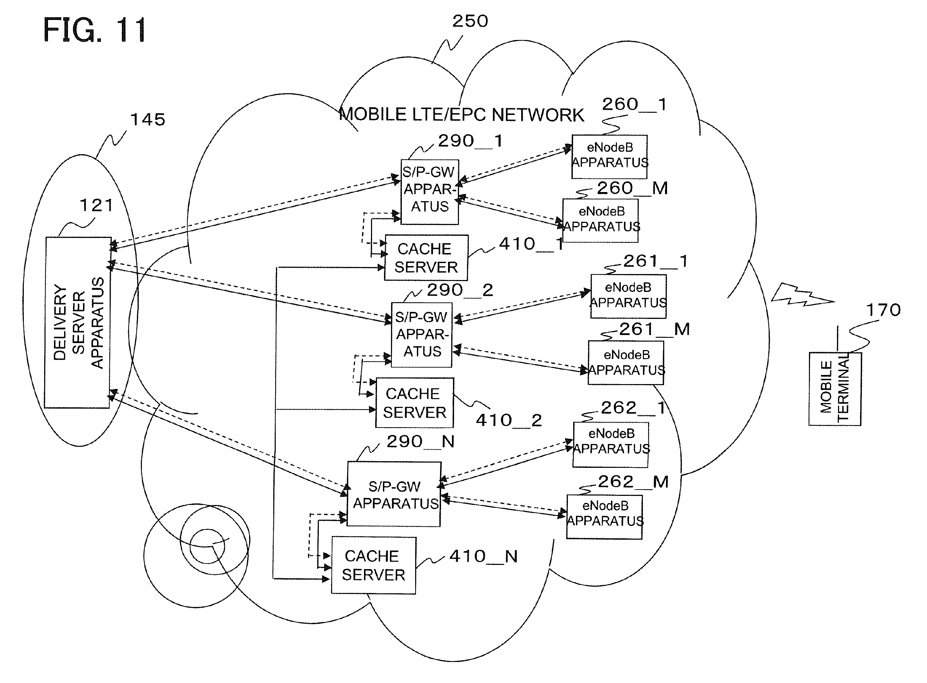

Fig. 11 is a block diagram illustrating a configuration of a content delivery system according to a seventh exemplary embodiment.

[Fig. 12]

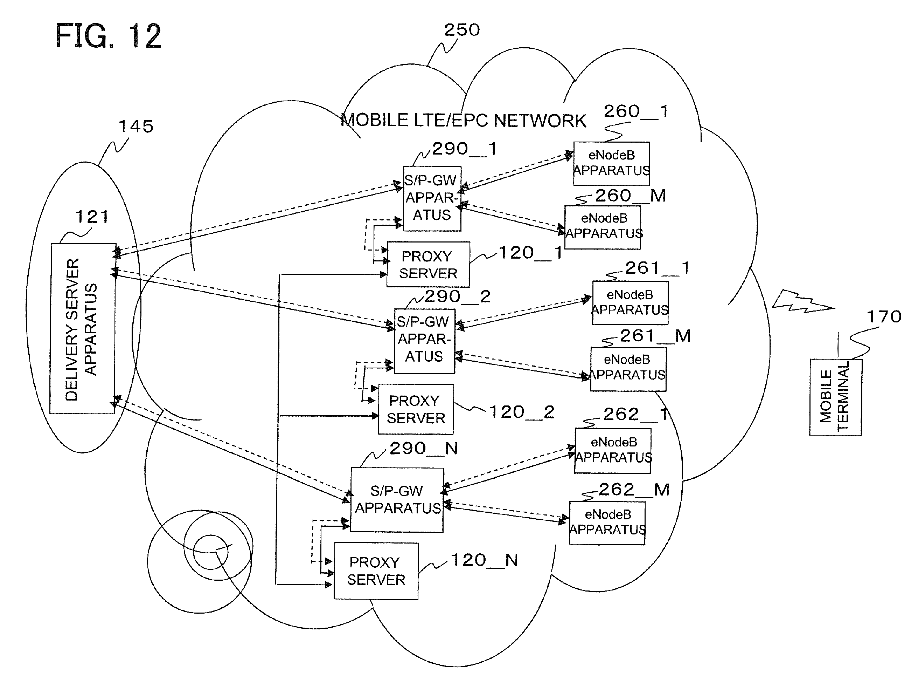

Fig. 12 is a block diagram illustrating a configuration of a content delivery system according to an eighth exemplary embodiment.

DESCRIPTION OF EMBODIMENTS

First, an outline of the present invention will be described. The reference characters in the following outline are merely used as examples to facilitate understanding of the present invention. Therefore, the reference characters are not intended to limit the present invention to the illustrated modes.

As illustrated in Figs. 1 and 2, a content delivery system according to the present invention comprises: a plurality of cache servers (110_1 to 110_N) on a mobile network (150). Each of the plurality of cache servers (110_1 to 110_N) comprises: a temporary content accumulation unit (113) that temporarily accumulates at least part of contents stored in a delivery server apparatus (121) delivering a content(s) on the Internet (145); a determination unit (117) that by using information included in a content request message from a mobile terminal (170) determines which one of the plurality of cache servers (110_1 to 110_N) accumulates a content requested by the mobile terminal (170); a content acquisition unit (112) that reads a file corresponding to the requested content from the determined cache server and outputs the file to the temporary content accumulation unit (113); and a delivery unit (114) that estimates a bandwidth of the mobile network (150) based on a predetermined signal from the mobile terminal (170), reads the file corresponding to the requested content from the temporary content accumulation unit (113), extracts a stream from the file, generates a stream by deleting at least part of frames from the stream so that a bit rate of the generated stream does not exceed the bandwidth, stores the generated stream in a packet, and transmits the packet to the mobile terminal (170).

In addition, the delivery unit (114) may read the file corresponding to the requested content from the temporary content accumulation unit (113) in portions, extract a stream from the file divided in portions, and generates a stream by deleting at least one frame whose priority is relatively low from the stream so that a bit rate of the generated stream does not exceed the bandwidth.

If the delivery unit (114) receives a response packet from the mobile terminal (170) in response to a transmitted

packet transmitted to the mobile terminal (170), the delivery unit may estimate the bandwidth of the mobile network (150) based on a difference between a transmission time of the transmitted packet and a reception time of the response packet and based on a size of the transmitted packet. If the delivery unit (114) receives a signal indicating a congestion state of the mobile network (150) from the mobile terminal (170), the delivery unit (114) may not transmit the packet for a predetermined period.

As illustrated in Fig. 4, the plurality of cache servers may be transparent or fully transparent proxy servers (120_1 to 120_N).

As illustrated in Figs. 5 and 6, the mobile network may be a 3G (3rd Generation) mobile network or an LTE (Long Term Evolution)/EPC (Evolved Packet Core) network (250).

According to the present invention, the following modes are possible.

(Mode 1)

A content delivery system may be the content delivery system according to the above first aspect.

(Mode 2)

The delivery unit may read the file corresponding to the requested content from the temporary content accumulation unit in portions, extract a stream from the file divided in portions, and generate a stream by deleting at least one frame whose priority is relatively low from the stream so that a bit rate of the generated stream does not exceed the bandwidth.

(Mode 3)

If the delivery unit receives a response packet from the mobile terminal in response to a transmitted packet transmitted to the mobile terminal, the delivery unit may estimate the bandwidth of the mobile network based on a difference between a transmission time of the transmitted packet and a reception time of the response packet and based on a size of the transmitted packet.

(Mode 4)

If the delivery unit receives a signal indicating a congestion state of the mobile network from the mobile terminal, the delivery unit may not transmit the packet for a predetermined period.

(Mode 5)

The plurality of cache servers may be transparent or fully transparent proxy servers.

(Mode 6)

The mobile network may be a 3G mobile network or an LTE (Long Term Evolution)/EPC (Evolved Packet Core) network.

(Mode 7)

A cache server may be the cache server according to the above second aspect.

(Mode 8)

The delivery unit may read the file corresponding to the requested content from the temporary content accumulation unit in portions, extract a stream from the file divided in portions, and generate a stream by deleting at least one frame whose priority is relatively low from the stream so that a bit rate of the generated stream does not exceed the bandwidth.

(Mode 9)

If the delivery unit receives a response packet from the mobile terminal in response to a transmitted packet transmitted to the mobile terminal, the delivery unit may estimate the bandwidth of the mobile network based on a difference between a transmission time of the transmitted packet and a reception time of the response packet and based on a size of the transmitted packet.

(Mode 10)

If the delivery unit receives a signal indicating a congestion state of the mobile network from the mobile terminal, the delivery unit may not transmit the packet for a predetermined period.

(Mode 11)

A content delivery method may be the content delivery method according to the above third aspect.

(Mode 12)

In the above content delivery method, the cache server may receive the file corresponding to the requested content from the temporary content accumulation unit in portions, extract a stream from the file divided in portions, and generate a stream by deleting at least one frame whose priority is relatively low from the stream so that a bit rate of the generated stream does not exceed the bandwidth

(Mode 13)

In the above content delivery method, if the cache server receives a response packet from the mobile terminal in response to a transmitted packet transmitted to the mobile terminal, the cache server may estimate the bandwidth of the mobile network based on a difference between a transmission time of the transmitted packet and a reception time of the response packet and based on a size of the transmitted packet.

(Mode 14)

In the above content delivery method, if the cache server receives a signal indicating a congestion state of the mobile network from the mobile terminal, the cache server may not transmit the packet for a predetermined period.

(Mode 15)

There is provided a program causing a computer provided with a cache server to execute:

temporarily accumulating at least part of contents stored in a delivery server apparatus delivering a content(s on the Internet in a temporary content accumulation unit provided in the cache server;
by using information included in a content request message from a mobile terminal, determining which one of the plurality of cache servers on a mobile network accumulates a content requested by the mobile terminal;
reading a file corresponding to the requested content from the determined cache server and outputting the file to the temporary content accumulation unit;
estimating a bandwidth of the mobile network based on a predetermined signal from the mobile terminal;
reading the file corresponding to the requested content from the temporary content accumulation unit;
extracting a stream from the read file, generating a stream by deleting at least part of frames from the stream so that a bit rate of the generated stream does not exceed the bandwidth, storing the generated stream in a packet, and transmitting the packet to the mobile terminal. The program can be provided as a program product recorded in a non-transient computer-readable recording medium.

(Mode 16)

The above program may cause the computer to execute receiving the file corresponding to the requested content from the temporary content accumulation unit in portions, extracting a stream from the file divided in portions, and generating a stream by deleting at least one frame whose priority is relatively low from the stream so that a bit rate of the generated stream does not exceed the bandwidth.

(Mode 17)

The above program may cause the computer to execute, upon receiving a response packet from the mobile terminal in response to a transmitted packet transmitted to the mobile terminal, estimating the bandwidth of the mobile network based on a difference between a transmission time of the transmitted packet and a reception time of the response packet and based on a size of the transmitted packet.

(Mode 18)

The above program may cause the' computer to execute, upon receiving a signal indicating a congestion state of the mobile network from the mobile terminal, stopping transmission of the packet for a predetermined period.

Configurations and operations of content delivery systems according to exemplary embodiments will be described in detail with reference to Figs. 1 to 6. In the following exemplary embodiments, configurations in which contents are moving images will be described as examples.

(First Exemplary Embodiment)

A content delivery system according to a first exemplary embodiment will be described with reference to the drawings. Fig. 1 illustrates a configuration of a content delivery system according to the present exemplary embodiment. As illustrated in Fig. 1, the content delivery system includes: a delivery server apparatus 121 on the Internet 145; SGSN (Serving GPRS Support Node)/GGSN (Gateway GPRS Support Node) apparatuses 190_1 to 190_N, cache servers 110_1 to 110_N, RNC (Radio Network Controller) apparatuses 195_1 to 195_L and 197_1 to 197_L, and base station apparatuses 180_1 to 180_M, 181_1 to 181_M, 182_1 to 182_M, and 183_1 to 183_M on a mobile network 150.

Fig. 1 illustrates a configuration in which a 3G mobile packet network is used as the mobile network and the SGSN/GGSN apparatuses are used as packet forwarding apparatuses. In addition, Fig. 1 illustrates a configuration in which cache servers are used.

The delivery server apparatus 121 on the Internet 145 accumulates various contents on the Internet. Hereinafter, these contents will be referred to as OTT (Over The Top) contents. In the present exemplary embodiment, a content is a compressed-and-encoded bit stream of a moving image content or a file storing such compressed-and-encoded bit stream. In addition, a mobile terminal 170 is used as a terminal. However, a terminal different from the mobile terminal 170 may be used as a terminal.

The SGSN/GGSN apparatuses 190_1 to 190_N (N ≥ 2) are arranged on the mobile network 150. The RNC apparatuses 195_1 to 195_L (L ≥ 2) are connected to the SGSN/GGSN apparatus 190_1. Likewise, the RNC apparatuses 197_1 to 197_L are connected to the SGSN/GGSN apparatus 190_N. While the L RNC apparatuses are also connected to the SGSN/GGSN apparatus 190_2, illustration thereof is omitted in Fig. 1 due to limitations of the space.

In addition, the M base stations (M ≥ 2) are connected to each of the RNC apparatuses. For example, the M base station apparatuses 180_1 to 180_M are connected to the RNC apparatus 195_1.

In Fig. 1, a single cache server is connected to a GGSN function unit of each SGSN/GGSN apparatus. For example, the cache server 110_1 is connected to the SGSN/GGSN apparatus 190_1. Herein, an SGSN/GGSN apparatus is an apparatus in which an SGSN function unit and a GGSN function unit are installed in a single location.

The mobile terminal 170 transmits a delivery connection request message including the URL (Uniform Resource Locator) of a requested content. Next, a base station apparatus (in Fig. 1, one of the base station apparatuses 181_1 to 181_M) whose service area is being visited by the mobile terminal 170 receives the connection request message and transmits the connection request message to an RNC apparatus (in Fig. 1, the RNC apparatus 195_L) managing the base station apparatus.

The RNC apparatus 195_L receives the connection request message from the base station apparatus and stores the connection request message, the IP (Internet Protocol) address of the delivery server apparatus 121, the IP address of the mobile terminal 170, and the like in a payload portion of a GTP (GPRS (General Packet Radio Service) Tunneling Protocol) packet, and forwards the GTP packet to the SGSN/GGSN apparatus 190_1 managing the RNC apparatuses 195_1 to 195_L.

Next, the SGSN/GGSN apparatus 190_1 receives the GTP packet.

The cache server 110_1 is connected to a Gi interface of a GGSN function unit of the SGSN/GGSN apparatus 190_1, for example. Likewise, the cache server 110_N is connected to a Gi interface of a GGSN function unit of the SGSN/GGSN apparatus 190_N. In addition, the cache servers 110_1 to 110_N are connected to each other so that the cache servers 110_1 to 110_N can coordinate with each other for contents.

Next, a configuration of the cache server 110_1 connected to the SGSN/GGSN apparatus 190_1 will be described with reference to the drawings. Fig. 2 is a block diagram illustrating a configuration of the cache server 110_1. Since the cache servers 110_2 to 110_N have the same configuration as that of the cache server 110_1, description thereof will be omitted.

As illustrated in Fig. 2, the cache server 110_1 includes a control signal transmission and reception unit 111, an analysis unit 115, a collection unit 116, a determination unit 117, a content acquisition unit 112, a temporary content accumulation unit 113, a content list creation unit 118, and a delivery unit 114.

The control signal transmission and reception unit 111 receives a GTP packet, which stores a connection request message, the IP address of the mobile terminal 170, the URL of a requested content, and the like transmitted from the mobile terminal 170, from the SGSN/GGSN apparatus 190_1. In addition, the control signal transmission and reception unit 111 receives information about the area being visited by the mobile terminal 170 from the SGSN/GGSN apparatus 190_1.

The analysis unit 115 reads the connection request message stored in the payload portion of the GTP packet, extracts information about the IP address of the mobile terminal 170, the URL of the requested content, and the like, and outputs the URL of the requested content, the IP address of the mobile terminal 170, and the like to the delivery unit 114 and the determination unit 117.

The collection unit 116 receives a list of contents accumulated in the cache server 110_1 and lists of contents accumulated in the cache servers 110_2 to 110_N other than the cache server 110_1. In addition, the collection unit 116 outputs these lists to the determination unit 117. The collection unit 116 may collect the content lists at predetermined time intervals or when receiving a connection request from the mobile terminal 170. Alternatively, the collection unit 116 may collect the content lists when a request is made by any one of the other cache servers 110_2 to 110_N to collect the content lists.

The determination unit 117 receives information about the IP address of the mobile terminal 170, the URL of the requested content, and the like, a list of contents accumulated in the cache server 110_1, and lists of contents accumulated in the cache servers 110_2 to 110_N other than the cache server 110_1. The determination unit 117 determines whether the content requested by the mobile terminal 170 is accumulated in the cache server 110_1 or in any one of the cache servers 110_2 to 110_N other than the cache server 110_1.

If the content requested by the mobile terminal 170 is accumulated in the cache server 110_1, the determination unit 117 instructs the temporary content accumulation unit 113 and the delivery unit 114 to perform reading and delivery, respectively.

If the content requested by the mobile terminal 170 is accumulated in any one of the cache servers 110_2 to 110_N, the determination unit 117 notifies the content acquisition unit 112 of the URL of the requested content and the IP address of the cache server in which the requested content is accumulated. In addition, the determination unit 117 instructs the content acquisition unit 112 to acquire the content from the target cache server through inter-cache-server coordination.

If the content requested by the mobile terminal 170 is not accumulated in the cache server 110_1 or in any one of the cache servers 110_2 to 110_N, the determination unit 117 instructs the content acquisition unit 112 to acquire the content from the delivery server apparatus 121.

From the determination unit 117, the content acquisition unit 112 receives the URL of the requested content and the content acquisition instruction. If the content is accumulated in another cache server, the content acquisition unit 112 receives the IP address of this cache server. If the content is accumulated in the delivery server apparatus 121, the content acquisition unit 112 receives the IP address of the delivery server apparatus 121. The content acquisition unit 112 acquires at least one copy of the requested content and outputs the copy to the temporary content accumulation unit 113.

The temporary content accumulation unit 113 accumulates the content outputted from the content acquisition unit 112. In addition, when receiving a content read instruction from the determination unit 117, the temporary content accumulation unit 113 reads a content file corresponding to the URL of the requested content and outputs the file to the delivery unit 114.

As needed, the content list creation unit 118 creates a list of all the contents accumulated in the temporary content accumulation unit 113. The content list creation unit 118 outputs the content list at predetermined time intervals or when a request is made by another cache server or by the collection unit 116.

The delivery unit 114 receives information about the URL of the requested content from the analysis unit 115 and receives a content delivery instruction from the determination unit 117. The delivery unit 114 reads a file corresponding to the requested content from the temporary content accumulation unit 113, generates packets of a predetermined protocol (for example, TCP (Transmission Control Protocol)), and transmits the packets to the SGSN/GGSN apparatus 190_1. The SGSN/GGSN apparatus 190_1 delivers the packets including the content to the mobile terminal 170.

Fig. 3 is a block diagram illustrating a configuration of the delivery unit 114. As illustrated in Fig. 3, the delivery unit 114 includes a reception unit 201, a bandwidth estimation unit 202, a content obtainment unit 203, a selection adjustment unit 204, and a transmission unit 200.

The reception unit 201 receives a TCP response signal packet (for example, a TCP Ack signal packet) from the mobile terminal 170 via the SGSN/GGSN apparatus and outputs information about the TCP response signal packet to the bandwidth estimation unit 202. Alternatively, when receiving an ECN (Explicit Congestion Notification) signal indicating a congestion state from the mobile terminal 170, the reception unit 201 may instruct the bandwidth estimation unit 202 to rapidly reduce the band.

The bandwidth estimation unit 202 receives informaiton about each transmitted packet transmitted from the transmission unit 200 (for example, the transmission time and the size of each transmitted packet) and information about a TCP response signal packet as described above. By using the number of each transmitted packet and by associating a transmitted packet with a TCP response signal packet, the bandwidth estimation unit 202 measures a response time $T_n$ based on formula (1).

$$T_n = T_n^{ack} - T_n^{send} \qquad (1)$$

In the above formula (1), $T_n$ represents the response time of an n-th packet, $T_n^{ack}$ represents time at which the reception unit 201 receives an n-th TCP response signal packet, and $T_n^{send}$ represents time at which the transmission unit 200 transmits an n-th transmitted packet.
The bandwidth estimation unit 202 sets the size of the n-th transmitted packet to $S_n$ and estimates a bandwidth $B_n$ of the n-th packet based on formula (2) and formula (3).

$$P_n = S_n / T_n \qquad (2)$$

$$B_n = (1 - \alpha) \times B_{n-1} + \alpha \times P_n \qquad (3)$$

In formula (3), $\alpha$ is a predetermined constant satisfying $0 < \alpha < 1$.
The bandwidth estimation unit 202 may perform these calculations based on formula (2) and formula (3) at predetermined time intervals or when a request is made by the content obtainment unit 203.
The bandwidth estimation unit 202 outputs the bandwidth $B_n$ estimated based on formula (3) to the selection adjustment unit 204 at predetermined time intervals T or when a request is made by the selection adjustment unit 204.
When receiving an ECN signal from the reception unit 201, the bandwidth estimation unit 202 may determine that the mobile network is in a congestion state and reduce the bandwidth $B_n$ estimated based on formula (2) by a predetermined amount or set $B_n = 0$. If the bandwidth estimation unit 202 sets $B_n = 0$, no packets are transmitted from the transmission unit 200 for a predetermined time period.
The content obtainment unit 203 receives the URL of the requested content from the analysis unit 115 in Fig. 2 and receives a content delivery instruction from the determination unit 117 in Fig. 2. In addition, the content obtainment unit 203 searches the temporary content accumulation unit 113 in Fig. 2 for a file corresponding to the requested content, obtains the corresponding file or stream and bit rate informaiton K, and outputs the file/stream and information to the selection adjustment unit 204.
The selection adjustment unit 204 receives the bandwidth $B_n$ from the bandwidth estimation unit 202 and receives a content file corresponding to the requested URL from the content obtainment unit 203 in portions. The content file is divided into portions so that each portion has a predetermined time length $\tau$ (the unit thereof is second) or a predetermined size G (the unit thereof is byte). In addition, the selection adjustment unit 204 receives the bit rate K (the unit thereof is bps) of the content from the content obtainment unit 203. For example, the selection adjustment unit 204 makes an adjustment to obtain a bit rate K' (the unit thereof is bps) as described by the following processing so that the bit rate of a stream extracted from the file inputted in portions does not exceed the estimated bandwidth $B_n$. Next, the selection adjustment unit 204 outputs the bit rate K' to the transmission unit 200. Herein, for example, $\tau$ is set to 2 seconds. Namely, the selection adjustment unit 204 receives a file divided into portions every two seconds from the content obtainment unit 203.
If $K \leq B_n$, the selection adjustment unit 204 sets K' = K, extracts a stream from the file inputted in portions, and outputs the stream to the transmission unit 200 without making any adjustment to the stream.
However, if $K > B_n$, the selection adjustment unit 204 extracts a stream from the file inputted in portions, reads a header portion from the stream, and determines whether the picture type of the stream header is an I picture (an Intra Coded Picture), a P picture (a Predictive Coded Picture), or a B picture (a Bidirectional Predictive Coded Picture). In addition, the selection adjustment unit 204 generates a stream obtained by sequentially deleting at least one frame whose priority is relatively low and calculates a bit rate K'. Herein, B pictures have lower priority than P pictures.
The selection adjustment unit 204 calculates the bit rate K' based on formula (4).

$$K' = K - \sum_j B_j \qquad (4)$$

In formula (4), Bj represents the bit rate of a j-th B picture included in a stream of the divided file. After performing the calculation based on formula (4), the selection adjustment unit 204 compares the bit rate K' with the bandwidth $B_n$.

If $K' \leq B_n$, the selection adjustment unit 204 outputs the stream obtained by deleting at least one B picture from the stream of the divided file through the above processing to the transmission unit 200.

However, if $K' > B_n$ and B pictures are still included in the stream of the divided file, the selection adjustment unit 204 creates a stream by deleting the remaining B pictures from the stream, calculates a bit rate K' based on formula (5), and compares the bit rate K' with the bandwidth $B_n$, again.

$$K' = K' - \sum_m B_m \qquad (5)$$

If no B pictures are included, the selection adjustment unit 204 creates a stream by deleting at least one P picture from the stream, calculates a bit rate K' based on formula (6), and compares the bit rate K' with the bandwidth $B_n$, again.

$$K' = K' - \sum_i P_i \qquad (6)$$

In formula (6), $P_i$ represents the bit rate of an i-th P picture included in the stream portion.

As a result of the above processing, if $K' \leq B_n$, the selection adjustment unit 204 outputs the stream created by the above processing to the transmission unit 200.

The transmission unit 200 receives the stream whose bit rate has been adjusted based on the divided file outputted from the selection adjustment unit 204, stores the stream in a TCP packet, and transmits the packet to the mobile terminal 170 via the SGSN/GGSN apparatus 190_1, a relevant RNC apparatus, and a relevant base station apparatus.

Various variations can be made to the content delivery system according to the first exemplary embodiment described above.

Fig. 1 illustrates a configuration in which a single cache server is connected to a single SGSN/GGSN apparatus. However, a single cache server may be connected to a plurality of SGSN/GGSN apparatuses. Alternatively, a plurality of cache servers may be connected to a single SGSN/GGSN apparatus.

The delivery server apparatus 121 may be connected to the cache server apparatuses 110_1 to 110_N.

Fig. 1 illustrates a configuration using SGSN/GGSN apparatuses, and an SGSN apparatus and a GGSN apparatus are integrated in each of the SGSN/GGSN apparatuses. However, a configuration in which an SGSN apparatus and a GGSN apparatus are separated from each other may be used. In such case, at least one cache server is connected to either the SGSN apparatus or the GGSN apparatus.

In addition, the delivery unit 114 may estimate the bandwidth based on a formula other than formula (2) and formula (3). The delivery unit 114 may adjust the bit rate based on a method other than the above method.

The mobile terminal 170 may be a mobile phone, a smartphone, a tablet, or a PC equipped with a data communication card. Alternatively, the mobile terminal 170 may be any terminal, as long as the terminal can communicate with a mobile 3G network.

(Second Exemplary Embodiment)

A content delivery system according to a second exemplary embodiment will be described with reference to the drawings. Fig. 4 is a block diagram illustrating a configuration of a content delivery system according to the present exemplary embodiment.

As illustrated in Fig. 4, in the present exemplary embodiment, as a variation of the first exemplary embodiment (Fig. 1), proxy servers 120_1 to 120_N are used in place of the cache servers 110_1 to 110_N. In Fig. 4, some components are denoted by the same reference characters as those in Fig. 1. Since these components perform the same operations as those in Fig. 1, description thereof will be omitted.

Transparent proxy servers and fully transparent proxy servers are two examples of the types of the proxy servers 120_1 to 120_N. Hereinafter, the proxy server 120_1 will be described. Since the other proxy servers 120_2 to 120_N operate in the same way as the proxy server 120_1, description thereof will be omitted.

First, an example where the proxy server 120_1 is a transparent proxy server will be described. The proxy server 120_1 temporarily terminates a message signal from the mobile terminal 170 and analyzes the message signal. The proxy server 120_1 delivers a content temporarily accumulated therein to the mobile terminal 170. As needed, the proxy server 120_1 transmits a request to or accesses the delivery server apparatus 121 via the SGSN/GGSN apparatus 190_1.

Next, an example where the proxy server 120_1 is a fully transparent proxy server will be described. The proxy server 120_1 does not change the URL of a requested content, the IP address of the delivery server apparatus 121 on the Internet, the IP address of the mobile terminal 170, and the like included in a request signal from the mobile terminal 170. The proxy server 120_1 uses a DPI (Deep Packet Inspection) technique and checks a packet header portion or the like, without terminating a signal from the mobile terminal 170. In addition, the proxy server 120_1 extracts information about the URL of the requested content, the IP address of the mobile terminal 170, and the like. If a requested content is cached in the proxy server 120_1, the proxy server 120_1 first transmits a delivery stop instruction to the delivery server apparatus 121 via the SGSN/GGSN apparatus 190_1. Next, the proxy server 120_1 delivers the requested content.

Since the proxy server 120_1 has the same configuration as that (Fig. 2) of the cache server 110_1 according to the first exemplary embodiment, detailed description thereof will be omitted.

(Third Exemplary Embodiment)

A content delivery system according to a third exemplary embodiment will be described with reference to the drawings. Fig. 5 is a block diagram illustrating a configuration of a content delivery system according to the present exemplary embodiment.

In the present exemplary embodiment, as illustrated in Fig. 5, in place of a 3G mobile network 150 illustrated in Fig. 1, an LTE (Long Term Evolution)/EPC (Evolved Packet Core) network, which is a 3.9G mobile network, is used as a mobile network 250. In LTE, while the functions of the base station apparatuses and the RNC apparatuses have been degenerated, eNodeB (evolved Node B) apparatuses are used, instead.

In addition, in EPC, S/P-GW (Serving/Packet Data-Gateway) apparatuses are connected to corresponding eNodeB apparatuses. An S/P-GW apparatus is an apparatus in which an S-GW apparatus and a P-GW apparatus are integrated. Fig. 5 illustrates a configuration in which M eNodeB apparatuses are connected to a single S/P-GW apparatus. For example, eNodeB apparatuses 260_1 to 260_M are connected to an S/P-GW apparatus 290_1.

A single cache server is connected to each S/P-GW apparatus. For example, a cache server 410_1 is connected to the S/P-GW apparatus 290_1. The cache servers 410_1 to 410_N are connected to each other to achieve coordination for contents.

The mobile terminal 170 transmits a delivery connection request message including the IP address of the delivery server apparatus 121. Next, an eNodeB apparatus (in Fig. 5, one of the eNodeB apparatuses 261_1 to 261_M) whose service area is being visited by the mobile terminal 170 receives the connection request message. The one of the eNodeB apparatuses 261_1 to 261M stores the connection request message, the IP address of the delivery server apparatus 121, the IP address of the mobile terminal 170, and the like in a payload portion with a GTP protocol and forwards the GTP packet to an S/P-GW apparatus 290_2.

The cache server 410_1 has the same configuration as that of the cache server 110_1 (Fig. 2) in the first exemplary embodiment. However, in the present exemplary embodiment, the control signal transmission and reception unit 111 is connected to the S/P-GW apparatus 290_1. Thus, the control signal transmission and reception unit 111 receives the GTP packet, which stores the connection request message, the IP address, and the like and location information about the mobile terminal 170 transmitted from the mobile terminal 170, from the S/P-GW apparatus 290_1. The other cache servers 410_2 to 410_N also perform this exchange with the respective S/P-GW apparatuses 290_2 to 290_N.

Various variations can be made to the content delivery system according to the third exemplary embodiment.

Fig. 5 illustrates a configuration using the S/P-GW apparatuses, and an S-GW apparatus and a P-GW apparatus are integrated in each of the S/P-GW apparatuses. However, a configuration in which an S-GW apparatus and a P-GW apparatus are separated from each other may be used. In such case, at least one cache server is connected to either the S-GW apparatus or the P-GW apparatus.

In addition, the mobile terminal 170 may be a mobile phone, a smartphone, a tablet, or a PC equipped with a data communication card. Alternatively, the mobile terminal 170 may be any terminal, as long as the terminal can communicate with a mobile 3.9G (3.9th Generation) network.

(Fourth Exemplary Embodiment)

A content delivery system according to a fourth exemplary embodiment will be described with reference to the drawings. Fig. 6 is a block diagram illustrating a configuration of a content delivery system according to the present exemplary embodiment.

Fig. 6 illustrates a configuration in which the cache servers in Fig. 5 are replaced by proxy servers. In this exemplary embodiment, since the content delivery system operates in the same way as that according to the second exemplary embodiment, description thereof will be omitted.

For example, the content delivery systems according to the first to fourth exemplary embodiments provide the following advantageous effects.

In the content delivery system according to any one of the above exemplary embodiments, when a moving image content of a certain bit rate on the Internet is delivered, even when the bandwidth (throughput) of a mobile network is changed with time by a traffic amount and the bandwidth continuously falls below the delivery bit rate, the bandwidth is estimated based on a TCP response signal or an ECN notification signal, moving image frames are sequentially discarded in ascending order of priority so that the bit rate of a stream extracted from a divided file does not exceed the estimated band, the adjusted stream is stored in a TCP packet, and the TCP packet is transmitted. According to such content delivery system, problems such as freeze-up of a moving image or interruption of voice on the client side during reproduction can be avoided. In addition, as a result, QoE (Quality of Experience) of the viewer can be significantly improved.

Configurations and operations of content delivery systems according to exemplary embodiments will be described in detail with reference to Figs. 7 to 12. In the following exemplary embodiments, configurations in which contents are moving images will be described as examples.

(Fifth Exemplary Embodiment)

A content delivery system according to a fifth exemplary embodiment will be described with reference to the drawings. Fig. 7 illustrates a configuration of a content delivery system according to the present exemplary embodiment. As illustrated in Fig. 7, the content delivery system includes: a delivery server apparatus 121 on the Internet 145; SGSN (Serving GPRS Support Node)/GGSN (Gateway GPRS Support Node) apparatuses 190_1 to 190_N, cache servers 110_1 to 110_N, RNC (Radio Network Controller) apparatuses 195_1 to 195_L and 197_1 to 197_L, and base station apparatuses 180_1 to 180_M, 181_1 to 181_M, 182_1 to 182_M, and 183_1 to 183_M on a mobile network 150.

Fig. 7 illustrates a configuration in which a 3G mobile packet network is used as the mobile network and the SGSN/GGSN apparatuses are used as packet forwarding apparatuses. In addition, Fig. 7 illustrates a configuration in which cache servers are used.

The delivery server apparatus 121 on the Internet 145 accumulates various contents on the Internet. Hereinafter, these contents will be referred to as OTT (Over The Top) contents. In the present exemplary embodiment, a content is a compressed-and-encoded bit stream of a moving image content or a file storing such compressed-and-encoded bit stream. In addition, a mobile terminal 170 is used as a terminal. However, a terminal different from the mobile terminal 170 may be used as a terminal.

The SGSN/GGSN apparatuses 190_1 to 190_N (N ≥ 2) are arranged on the mobile network 150. The RNC apparatuses 195_1 to 195_L (L ≥ 2) are connected to the SGSN/GGSN apparatus 190_1. Likewise, the RNC apparatuses 197_1 to 197_L are connected to the SGSN/GGSN apparatus 190_N. While the L RNC apparatuses are also connected to the SGSN/GGSN apparatus 190_2, illustration thereof is omitted in Fig. 7 due to limitations of the space.

In addition, the M base stations (M ≥ 2) are connected to each of the RNC apparatuses. For example, the M base station apparatuses 180_1 to 180_M are connected to the RNC apparatus 195_1.

In Fig. 7, a single cache server is connected to a GGSN function unit of each SGSN/GGSN apparatus. For example, the cache server 110_1 is connected to the SGSN/GGSN apparatus 190_1. Herein, an SGSN/GGSN apparatus is an apparatus in which an SGSN function unit and a GGSN function unit are installed in a single location.

The mobile terminal 170 transmits a delivery connection request message including the URL (Uniform Resource Locator) of a requested content. Next, a base station apparatus (in Fig. 7, one of the base station apparatuses 181_1 to 181_M) whose service area is being visited by the mobile terminal 170 receives the connection request message and transmits the connection request message to an RNC apparatus (in Fig. 7, the RNC apparatus 195_L) managing the base station apparatus.

The RNC apparatus 195_L receives the connection request message from the base station apparatus stores the connection request message, the IP (Internet Protocol) address of the delivery server apparatus 121, the IP address of the mobile terminal 170, and the like in a payload portion of a GTP (GPRS (General Packet Radio Service) Tunneling Protocol) packet, and forwards the GTP packet to the SGSN/GGSN apparatus 190_1 managing the RNC apparatuses 195_1 to 195_L.

Next, the SGSN/GGSN apparatus 190_1 receives the GTP packet.

The cache server 110_1 is connected to a Gi interface of a GGSN function unit of the SGSN/GGSN apparatus 190_1, for example. Likewise, the cache server 110_N is connected to a Gi interface of a GGSN function unit of the SGSN/GGSN apparatus 190_N. In addition, the cache servers 110_1 to 110_N are connected to each other so that the cache servers 110_1 to 110_N can coordinate with each other for contents.

Next, a configuration of the cache server 110_1 connected to the SGSN/GGSN apparatus 190_1 will be described with reference to the drawings. Fig. 8 is a block diagram illustrating a configuration of the cache server 110_1. Since the cache servers 110_2 to 110_N have the same configuration as that of the cache server 110_1, description thereof will be omitted.

As illustrated in Fig. 8, the cache server 110_1 includes a control signal transmission and reception unit 111, an analysis unit 115, a collection unit 116, a determination unit 117, a content acquisition unit 112, a temporary content accumulation unit 113, a content list creation unit 118, and a delivery unit 114.

The control signal transmission and reception unit 111 receives a GTP packet, which stores a connection request message, the IP address of the mobile terminal 170, the URL of a requested content, and the like transmitted from the mobile terminal 170, from the SGSN/GGSN apparatus 190_1. In addition, the control signal transmission and reception unit 111 receives information about the area being visited by the mobile terminal 170 from the SGSN/GGSN apparatus 190_1.

The analysis unit 115 reads the connection request message stored in the payload portion of the GTP packet, extracts information about the IP address of the mobile terminal 170, the URL of the requested content, and the like, and outputs the URL of the requested content, the IP address of the mobile terminal 170, and the like to the delivery unit 114 and the determination unit 117.

The collection unit 116 receives a list of contents accumulated in the cache server 110_1 and lists of contents accumulated in the cache servers 110_2 to 110_N other than the cache server 110_1. In addition, the collection unit 116 outputs these lists to the determination unit 117. The collection unit 116 may collect the content lists at predetermined time intervals or when receiving a connection request from the mobile terminal 170. Alternatively, the collection unit 116 may collect the content lists when a request is made by any one of the other cache servers 110_2 to 110_N to collect the content lists.

The determination unit 117 receives information about the IP address of the mobile terminal 170, the URL of the requested content, and the like, a list of contents accumulated in the cache server 110_1, and lists of contents accumulated in the cache servers 110_2 to 110_N other than the cache server 110_1. The determination unit 117 determines whether the content requested by the mobile terminal 170 is accumulated in the cache server 110_1 or in any one of the cache servers 110_2 to 110_N other than the cache server 110_1.

If the content requested by the mobile terminal 170 is accumulated in the cache server 110_1, the determination unit 117 instructs the temporary content accumulation unit 113 and the delivery unit 114 to perform reading and delivery, respectively.

If the content requested by the mobile terminal 170 is accumulated in any one of the cache servers 110_2 to 110_N, the determination unit 117 notifies the content acquisition unit 112 of the URL of the requested content and the IP address of the cache server in which the requested content is accumulated. In addition, the determination unit 117 instructs the content acquisition unit 112 to acquire the content from the target cache server through inter-cache-server coordination.

If the content requested by the mobile terminal 170 is not accumulated in the cache server 110_1 or in any one of the cache servers 110_2 to 110_N, the determination unit 117 instructs the content acquisition unit 112 to acquire the content from the delivery server apparatus 121.

From the determination unit 117, the content acquisition unit 112 receives the URL of the requested content and the content acquisition instruction. If the content is accumulated in another cache server, the content acquisition unit 112 receives the IP address of this cache server. If the content is accumulated in the delivery server apparatus 121, the content acquisition unit 112 receives the IP address of the delivery server apparatus 121. The content acquisition unit 112 acquires at least one copy of the requested content and outputs the copy to the temporary content accumulation unit 113.

The temporary content accumulation unit 113 accumulates the content outputted from the content acquisition unit 112. In addition, when receiving a content read instruction from the determination unit 117, the temporary content accumulation unit 113 reads a content file corresponding to the requested content and outputs the file to the delivery unit 114.

As needed, the content list creation unit 118 creates a list of all the contents accumulated in the temporary content accumulation unit 113. The content list creation unit 118 outputs the content list at predetermined time intervals or when a request is made by another cache server or by the collection unit 116.

Fig. 9 is a block diagram illustrating a configuration of the delivery unit 114. As illustrated in Fig. 9, the delivery unit 114 includes a reception unit 201, a bandwidth estimation unit 202, a content obtainment unit 203, a selection adjustment unit 204, a transmission timing control unit 205, and a transmission unit 200.

The reception unit 201 receives a TCP (Transmission Control Protocol) response signal packet (for example, a TCP Ack signal packet) from the mobile terminal 170 via the SGSN/GGSN apparatus and outputs information about the TCP response signal packet to the bandwidth estimation unit 202. Alternatively, when receiving an ECN (Explicit Congestion Notification) signal indicating a congestion state from the mobile terminal 170, the reception unit 201 may instruct the bandwidth estimation unit 202 to rapidly reduce the band.

The bandwidth estimation unit 202 receives information about each transmitted packet transmitted from the transmission unit 200 (for example, the transmission time and the packet size of an n-th transmitted packet) and information about a TCP response signal packet (for example, the reception time of an n-th packet). By using the number of each transmitted packet and by associating a transmitted packet with a TCP response signal packet, the bandwidth estimation unit 202 measures a response time $T_n$ based on formula (1).

$$T_n = T_n^{ack} - T_n^{send} \qquad (1)$$

In the above formula (1), $T_n$ represents the response time of an n-th packet, $T_n^{ack}$ represents time at which the reception unit 201 receives an n-th TCP response signal packet, and $T_n^{send}$ represents time at which the transmission unit 200 transmits an n-th transmitted packet.

The bandwidth estimation unit 202 sets the size of the n-th transmitted packet to $S_n$ (unit: byte) and estimates a bandwidth $B_n$ of the n-th packet based on formula (2) and formula (3).

$$P_n = S_n / T_n \qquad (2)$$

$$B_n = (1 - \alpha) \times B_{n-1} + \alpha \times P_n \qquad (3)$$

In formula (3), $\alpha$ is a predetermined constant satisfying $0 < \alpha < 1$.

The bandwidth estimation unit 202 may perform these calculations based on formula (2) and formula (3) at predetermined time intervals or when the reception unit 201 receives a TCP response signal.

The bandwidth estimation unit 202 outputs the bandwidth $B_n$ estimated based on formula (3) to the selection adjustment unit 204 at predetermined time intervals T or when a request is made by the selection adjustment unit.

When receiving an ECN signal from the reception unit 201, the bandwidth estimation unit 202 may determine that the mobile network is in a congestion state and reduce the bandwidth $B_n$ estimated based on formula (2) by a predetermined amount or set $B_n = 0$. If the bandwidth estimation unit 202 sets $B_n = 0$, no packets are transmitted from the transmission unit 200 for a predetermined time period.

The content obtainment unit 203 receives information about the requested content from the analysis unit 115 in Fig. 8 and receives a content delivery instruction from the determination unit 117 in Fig. 8. In addition, the content obtainment unit 203 searches the temporary content accumulation unit 113 in Fig. 8 for a file corresponding to the requested content, obtains the corresponding file or stream and bit rate information K, and outputs the file/stream and information to the selection adjustment unit 204.

The selection adjustment unit 204 receives the bandwidth $B_n$ from the bandwidth estimation unit 202 at predetermined time intervals and receives a requested content file from the content obtainment unit 203 in portions. The content file is divided into portions so that each portion has a predetermined time length $\tau$ (the unit thereof is second). In addition, the selection adjustment unit 204 uses formula (4) to calculate the bit rate K of the divided file based on the size $S_d$ (the unit thereof is bit) of the file inputted in portions and the time length $\tau$.

$$K = S_d / \tau \qquad (4)$$

Next, the selection adjustment unit 204 determines whether the above bit rate K exceeds the estimated bandwidth $B_n$. If the bit rate K exceeds the bandwidth $B_n$, the selection adjustment unit 204 discards moving image frames having lower priority so that an adjusted bit rate K' does not exceed the bandwidth $B_n$. After making such adjustment, the adjusted divided file is outputted to the transmission unit 200. Hereinafter, an example of an adjustment operation performed by the selection adjustment unit 204 will be described. Herein, for example, $\tau$ is set to 2 seconds. Namely, the selection adjustment unit 204 receives a file divided into portions every two seconds from the content obtainment unit 203.

If K ≤ $B_n$, the selection adjustment unit 204 sets K' = K and outputs the divided file to the transmission timing control unit 205 without making any adjustment to the divided file.

However, if K > $B_n$, the selection adjustment unit 204 extracts a stream from the file inputted in portions, reads a header portion from the stream, and determines whether the picture type of the stream header is an I picture (an Intra Coded Picture), a P picture (a Predictive Coded Picture), or a B picture (a Bidirectional Predictive Coded Picture). In addition, the selection adjustment unit 204 generates a stream obtained by sequentially deleting at least one frame whose priority is relatively low and calculates a bit rate K'. Herein, B pictures have lower priority than P pictures.

The selection adjustment unit 204 calculates the bit rate K' based on formula (5).

$$K' = K - \sum_j B_j \qquad (5)$$

In formula (5), $B_j$ represents the bit rate of a j-th B picture included in a stream of the divided file. After performing the calculation based on formula (5), the selection adjustment unit 204 compares the bit rate K' with the bandwidth $B_n$, again.

If K' ≤ $B_n$, the selection adjustment unit 204 stores the stream created by the processing based on formula (5) in a file again and outputs the file to the transmission timing control unit 205.

However, if K' > $B_n$ and B pictures are still included in the stream of the divided file, the selection adjustment unit 204 creates a stream by deleting the remaining B pictures from the stream, calculates a bit rate K' based on formula (6), and compares the bit rate K' with the bandwidth $B_n$, again.

$$K' = K' - \sum_m B_m \qquad (6)$$

If no B pictures are included, the selection adjustment unit 204 creates a stream by deleting at least one P picture from the stream, calculates a bit rate K' based on formula (7), and compares the bit rate K' with the bandwidth $B_n$, again.

$$K' = K' - \sum_i P_i \qquad (7)$$

In formula (7), $P_i$ represents the bit rate of an i-th P picture included in the stream portion.

Through the processing based on formula (6) and formula (7), if K' ≤ $B_n$, the selection adjustment unit 204 stores the stream created by the processing in a file again and outputs the file to the transmission timing control unit 205.

The transmission timing control unit 205 receives the bandwidth $B_n$ from the bandwidth estimation unit 202, receives the bit rate K' from the selection adjustment unit 204, and receives the file portion adjusted so that the bit rate K' thereof does not exceed the bandwidth $B_n$ from the selection adjustment unit 204. In addition, for example, the transmission timing control unit 205 controls transmission timing of the file as follows.

If K' < $B_n$, the transmission timing control unit 205 outputs an inputted file for a time period T1 that is necessary to occupy the buffer capacity L of the mobile terminal 170 to the transmission unit 200. The time period T1 can be set based on formula (8).

$$T1 = L / K' \qquad (8)$$

In addition, a time period T is appropriately set so that T > T1 and data corresponding to the buffer capacity L of the mobile terminal 170 is not depleted within a time period T - T1.

If K' = $B_n$, the transmission timing control unit 204 does not output the inputted file to the transmission unit 200 for a predetermined time period T2. However, the time period T2 is a time period during which data in the buffer capacity L of the mobile terminal 170 is not depleted. The maximum value of the time period T2 is given by formula (9).

$$MaxT2 = L / B_p \qquad (9)$$

In formula (9), a bit rate $B_p$ represents a bit rate used when a moving image is reproduced by the mobile terminal 170.

The transmission unit 200 stores the content in a TCP packet and transmits the packet to the mobile terminal 170 via the SGSN/GGSN apparatus 190_1, a relevant RNC apparatus, and a relevant base station apparatus, for the time period T1 during which the content is outputted from the transmission timing control unit 204. In contrast, the transmission unit 200 does not transmit such TCP packet between the time period T - T1 and the time period T2. In addition, the transmission unit 200 outputs the size $S_n$ of the n-th transmitted packet to the bandwidth estimation unit 202.

Various variations can be made to the content delivery system according to the fifth exemplary embodiment described above.

Fig. 7 illustrates a configuration in which a single cache server is connected to a single SGSN/GGSN apparatus. However, a single cache server may be connected to a plurality of SGSN/GGSN apparatuses. Alternatively, a plurality of cache servers may be connected to a single SGSN/GGSN apparatus.

The delivery server apparatus 121 may be connected to the cache server apparatuses 110_1 to 110_N.

Fig. 7 illustrates a configuration using SGSN/GGSN apparatuses, and an SGSN apparatus and a GGSN apparatus are integrated in each of the SGSN/GGSN apparatuses. However, a configuration in which an SGSN apparatus and a GGSN apparatus are separated from each other may be used. In such case, at least one cache server is connected to either the SGSN apparatus or the GGSN apparatus.

In addition, the delivery unit 114 may estimate the bandwidth based on a formula other than formula (2) and formula (3). In addition, the selection adjustment unit 204 may use a different bit rate adjustment method. In addition, the transmission timing control unit 205 may use a different transmission timing control method. The transmission timing control unit 205 may be configured so that the transmission timing control unit 205 controls the transmission timing at least for a certain period (time period) and does not control the transmission timing other than such period.

The mobile terminal 170 may be a mobile phone, a smartphone, a tablet, or a PC equipped with a data communication card. Alternatively, the mobile terminal 170 may be any terminal, as long as the terminal can communicate with a mobile 3G network.

(Sixth Exemplary Embodiment)

A content delivery system according to a sixth exemplary embodiment will be described with reference to the drawings. Fig. 10 is a block diagram illustrating a configuration of a content delivery system according to the present exemplary embodiment.

As illustrated in Fig. 10, in the present exemplary embodiment, as a variation of the fifth exemplary embodiment (Fig. 7), proxy servers 120_1 to 120_N are used in place of the cache servers 110_1 to 110_N. In Fig. 10, some components are denoted by the same reference characters as those in Fig. 7. Since these components perform the same operations as those in Fig. 7, description thereof will be omitted.

Transparent proxy servers and fully transparent proxy servers are two examples of the types of the proxy servers 120_1 to 120_N. Hereinafter, the proxy server 120_1 will be described. Since the other proxy servers 120_2 to 120_N operate in the same way as the proxy server 120_1, description thereof will be omitted.

First, an example where the proxy server 120_1 is a transparent proxy server will be described. The proxy server 120_1 temporarily terminates a message signal from the mobile terminal 170 and analyzes the message signal. The proxy server 120_1 delivers a content temporarily accumulated therein to the mobile terminal 170. As needed, the proxy server 120_1 transmits a request to or accesses the delivery server apparatus 121 via the SGSN/GGSN apparatus 190_1.

Next, an example where the proxy server 120_1 is a fully transparent proxy server will be described. The proxy server 120_1 does not change the URL of a requested content, the IP address of the delivery server apparatus 121 on the Internet 145, the IP address of the mobile terminal 170, and the like included in a request signal from the mobile terminal 170. The proxy server 120_1 uses a DPI (Deep Packet Inspection) technique and checks a packet header portion or the like, without terminating a signal from the mobile terminal 170. In addition, the proxy server 120_1 extracts information about the URL of the requested content, the IP address of the mobile terminal 170, and the like. If a requested content is cached in the proxy server 120_1, the proxy server 120_1 first transmits a delivery stop instruction to the delivery server apparatus 121 via the SGSN/GGSN apparatus 190_1. Next, the proxy server 120_1 delivers the requested content.

Since the proxy server 120_1 has the same configuration as that (Fig. 8) of the cache server 110_1 according to the fifth exemplary embodiment, detailed description thereof will be omitted.

(Seventh Exemplary Embodiment)

A content delivery system according to a seventh exemplary embodiment will be described with reference to the drawings. Fig. 11 is a block diagram illustrating a configuration of a content delivery system according to the present exemplary embodiment.

In the present exemplary embodiment, as illustrated in Fig. 11, in place of a 3G mobile network 150 illustrated in Fig. 7, an LTE (Long Term Evolution)/EPC (Evolved Packet Core) network, which is a 3.9G mobile network, is used as a mobile network 250. In LTE, while the functions of the base station apparatuses and the RNC apparatuses have been degenerated, eNodeB (evolved Node B) apparatuses are used, instead.

In addition, in EPC, S/P-GW (Serving/Packet Data-Gateway) apparatuses are connected to corresponding eNodeB apparatuses. An S/P-GW apparatus is an apparatus in which an S-GW apparatus and a P-GW apparatus are integrated. Fig. 11 illustrates a configuration in which M eNodeB apparatuses are connected to a single S/P-GW apparatus. For example, eNodeB apparatuses 260_1 to 260_M are connected to an S/P-GW apparatus 290_1.

A single cache server is connected to each S/P-GW apparatus. For example, a cache server 410_1 is connected to the S/P-GW apparatus 290_1. The cache servers 410_1 to 410_N are connected to each other to achieve coordination for contents.

The mobile terminal 170 transmits a delivery connection request message including the IP address of the delivery server apparatus 121. Next, an eNodeB apparatus (in Fig. 11, one of the eNodeB apparatuses 261_1 to 261_M) whose service area is being visited by the mobile terminal 170 receives the connection request message. The one of the eNodeB apparatuses 261_1 to 261M stores the connection request message, the IP address of the delivery server apparatus 121, the IP address of the mobile terminal 170, and the like in a payload portion with a GTP protocol and forwards the GTP packet to an S/P-GW apparatus 290_2.

The cache server 410_1 has the same configuration as that of the cache server 110_1 (Fig. 8) in the fifth exemplary embodiment. However, in the present exemplary embodiment, the control signal transmission and reception unit 111 is connected to the S/P-GW apparatus 290_1. Thus, the control signal transmission and reception unit 111 receives the GTP packet, which stores the connection request message, the IP address, and the like and location information about the mobile terminal 170 transmitted from the mobile terminal 170, from the S/P-GW apparatus 290_1. The other cache servers 410_2 to 410_N also perform this exchange with the respective S/P-GW apparatuses 290_2 to 290_N.

Various variations can be made to the content delivery system according to the seventh exemplary embodiment.

Fig. 11 illustrates a configuration using the S/P-GW apparatuses, and an S-GW apparatus and a P-GW apparatus are integrated in each of the S/P-GW apparatuses. However, a configuration in which an S-GW apparatus and a P-GW apparatus are separated from each other may be used. In such case, at least one cache server is connected to either the S-GW apparatus or the P-GW apparatus.

The mobile terminal 170 may be a mobile phone, a smartphone, a tablet, or a PC equipped with a data communication card. Alternatively, the mobile terminal 170 may be any terminal, as long as the terminal can communicate with a mobile 3.9G network.

(Eighth Exemplary Embodiment)

A content delivery system according to an eighth exemplary embodiment will be described with reference to the drawings. Fig. 12 is a block diagram illustrating a configuration of a content delivery system according to the present exemplary embodiment.

Fig. 12 illustrates a configuration in which the cache servers in the content delivery system (Fig. 11) according to the seventh exemplary embodiment are replaced by proxy servers. In this exemplary embodiment, since the content delivery system operates in the same way as that according to the sixth exemplary embodiment, description thereof will be omitted.

For example, the content delivery systems according to the first to eighth exemplary embodiments provide the following advantageous effects.

In the content delivery system according to any one of the above exemplary embodiments, when a moving image content of a certain bit rate on the Internet is delivered, the bandwidth is estimated based on a TCP response signal or an ECN notification signal, moving image frames are sequentially discarded in ascending order of priority so that the bit rate of a stream extracted from a divided file does not exceed the estimated band, the adjusted stream is stored in a TCP packet, and the TCP packet is transmitted.

According to such content delivery system, problems such as freeze-up of a moving image or interruption of voice on the client side during reproduction can be avoided, even when the bandwidth (throughput) of a mobile network is changed with time by a traffic amount and the bandwidth continuously falls below the delivery bit rate. In addition, as a result, QoE (Quality of Experience) of the viewer can be significantly improved.

In addition, by using an estimated bandwidth value of the mobile network and an estimated buffer amount of the mobile terminal, the transmission timing control unit controls transmission timing so that the bandwidth and the buffer capacity are not exceeded. Thus, future data that is not currently needed by the viewer for viewing is not delivered. Even if the view stops viewing halfway, data that has already been delivered is an appropriate amount of data in view of an estimated band. Namely, unlike the conventional content delivery systems, an excessive amount of data is not delivered and the limited bandwidth of a mobile network is not needlessly consumed.

In addition, these advantageous effects are provided without making any modifications to terminals.

The disclosure of prior art including the above PTLs is incorporated herein by reference thereto. Modifications and adjustments of the exemplary embodiments are possible within the scope of the overall disclosure (including the claims) of the present invention and based on the basic technical concept of the present invention. Various combinations and selections of various disclosed elements (including each element in each claim, exemplary embodiment, drawing, etc.) are possible within the scope of the claims of the present invention. That is, the present invention of course includes various variations and modifications that could be made by those skilled in the art according to the overall disclosure including the claims and the technical concept. The present description discloses numerical value ranges. However, even if the description does not particularly disclose arbitrary numerical values or small ranges included in the ranges, these values and ranges should be deemed to have been specifically disclosed.

REFERENCE SIGNS LIST

| | |
|---|---|
| 110_1 to 110_N, 410_1 to 410_N | cache server |
| 111 | control signal transmission and reception unit |
| 112 | content acquisition unit |
| 113 | temporary content accumulation unit |
| 114 | delivery unit |
| 115 | analysis unit |
| 116 | collection unit |
| 117 | determination unit |
| 118 | content list creation unit |
| 120_1 to 120_N | proxy server |
| 121 | delivery server apparatus |
| 145 | Internet |
| 150 | mobile network |
| 170 | mobile terminal |
| 180_1 to 180_M, 181_1 to 181_M, 182_1 to 182_M, 183_1 to 183_M | base station apparatus |
| 190_1 to 190_N | SGSN/GGSN apparatus |
| 195_1 to 195_L, 197_1 to 197_L | RNC apparatus |
| 200 | transmission unit |
| 201 | reception unit |
| 202 | bandwidth estimation unit |
| 203 | content obtainment unit |
| 204 | selection adjustment unit |
| 205 | transmission timing control unit |
| 250 | mobile LTE/EPC network |
| 260_1 to 260_M, 261_1 to 261_M, 262_1 to 262_MeNodeB | apparatus |
| 290_1 to 290_N S/P-GW | apparatus |

**Claims**

1.  A content delivery system, comprising:

    a plurality of cache servers on a mobile network;
    wherein each of the plurality of cache servers comprises:

    a temporary content accumulation unit that temporarily accumulates at least part of contents stored in a delivery server apparatus delivering a content(s) on the Internet;
    a determination unit that by using information included in a content request message from a mobile terminal determines which one of the plurality of cache servers accumulates a content requested by the mobile terminal;

a content acquisition unit that reads a file corresponding to the requested content from the determined cache server and outputs the file to the temporary content accumulation unit; and

a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a packet, and transmits the packet to the mobile terminal.

**2.** The content delivery system according to claim 1;

wherein the delivery unit reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

**3.** The content delivery system according to claim 1 or 2;

wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

**4.** The content delivery system according to claim 1 or 2;

wherein, if the delivery unit receives a signal indicating a congestion state of the mobile network from the mobile terminal, the delivery unit does not transmit the packet for a predetermined period.

**5.** The content delivery system according to claim 1;

wherein the delivery unit estimates the bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the stream in a file, transmits a packet including the file storing the adjusted stream to the mobile terminal while controlling transmission timing based on a buffer capacity of the mobile terminal at least for a certain period.

**6.** The content delivery system according to claim 5;

wherein, if a bit rate of the file storing the adjusted stream is lower than the bandwidth, the delivery unit calculates a period that is required for a buffer amount of the mobile terminal to reach the buffer capacity based on the bit rate and the buffer capacity and does not transmit the packet during a period until the buffer amount reaches zero, which period is determined based on the calculated period.

**7.** The content delivery system according to claim 5;

wherein, if a bit rate of the file storing the adjusted stream is equal to the bandwidth, the delivery unit calculates a period required for a buffer amount of the mobile terminal to reach zero based on a bit rate at which the mobile terminal reproduces a content and on the buffer capacity and does not transmit the packet for the period.

**8.** The content delivery system according to any one of claims 5 to 7;

wherein the delivery unit reads the file corresponding to the requested content from the temporary content accumulation unit in portions, extract a stream from the file divided in portions, and generates a stream by deleting at least one frame whose priority is relatively low from the stream so that a bit rate of the generated stream does not exceed the bandwidth.

**9.** The content delivery system according to any one of claims 5 to 8;

wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

**10.** The content delivery system according to any one of claims 5 to 8;

wherein, if the delivery unit receives a signal indicating a congestion state of the mobile network from the mobile terminal, the delivery unit does not transmit the packet for a predetermined period.

**11.** The content delivery system according to any one of claims 1 to 10;
wherein the plurality of cache servers are transparent or fully transparent proxy servers.

**12.** The content delivery system according to any one of claims 1 to 11;
wherein the mobile network is a 3G (3rd Generation) mobile network or an LTE (Long Term Evolution)/EPC (Evolved Packet Core) network.

**13.** A cache server, comprising:

a temporary content accumulation unit that temporarily accumulates at least part of contents stored in a delivery server apparatus delivering a content(s) on the Internet;
a determination unit that by using information included in a content request message from a mobile terminal determines which one of the plurality of cache servers on a mobile network accumulates a content requested by the mobile terminal;
a content acquisition unit that reads a file corresponding to the requested content from the determined cache server and outputs the file to the temporary content accumulation unit; and
a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a packet, and transmits the packet to the mobile terminal.

**14.** The cache server according to claim 13;
wherein the delivery unit reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

**15.** The cache server according to claim 13 or 14;
wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

**16.** The cache server according to claim 13 or 14;
wherein, if the delivery unit receives a signal indicating a congestion state of the mobile network from the mobile terminal, the delivery unit does not transmit the packet for a predetermined period.

**17.** The cache server according to claim 13;
wherein the delivery unit estimates the bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the stream in a file, and transmits a packet including the file storing the adjusted stream to the mobile terminal while controlling transmission timing based on a buffer capacity of the mobile terminal at least for a certain period.

**18.** The cache server according to claim 17;
wherein, if a bit rate of the file storing the adjusted stream is lower than the bandwidth, the delivery unit calculates a period that is required for a buffer amount of the mobile terminal to reach the buffer capacity based on the bit rate and the buffer capacity and does not transmit the packet during a period until the buffer amount reaches zero, which period is determined based on the calculated period.

**19.** The cache server according to claim 17;
wherein, if a bit rate of the file storing the adjusted stream is equal to the bandwidth, the delivery unit calculates a period required for a buffer amount of the mobile terminal to reach zero based on a bit rate at which the mobile terminal reproduces a content and on the buffer capacity and does not transmit the packet for the period.

**20.** The cache server according to any one of claims 17 to 19;

wherein the delivery unit reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

21. The cache server according to any one of claims 17 to 20;
wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

22. The cache server according to any one of claims 17 to 20;
wherein, if the delivery unit receives a signal indicating a congestion state of the mobile network from the mobile terminal, the delivery unit does not transmit the packet for a predetermined period.

23. A content delivery method, comprising:

by a cache server, temporarily accumulating at least part of contents stored in a delivery server apparatus delivering a content(s) on the Internet in a temporary content accumulation unit provided with the cache server;
by using information included in a content request message from a mobile terminal, determining which one of the plurality of cache servers on a mobile network accumulates a content requested by the mobile terminal;
reading a file corresponding to the requested content from the determined cache server and outputting the file to the temporary content accumulation unit;
estimating a bandwidth of the mobile network based on a predetermined signal from the mobile terminal;
reading the file corresponding to the requested content from the temporary content accumulation unit; and
extracting a stream from the read file, generating a stream by deleting at least part of frames from the stream so that a bit rate of the generated stream does not exceed the bandwidth, storing the generated stream in a packet, and transmitting the packet to the mobile terminal.

24. The content delivery method according to claim 23;
wherein the cache server receives the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

25. The content delivery method according to claim 23 or 24;
wherein, if the cache server receives a response packet from the mobile terminal in response to a transmitted packet transmitted to the mobile terminal, the cache server estimates the bandwidth of the mobile network based on a difference between a transmission time of the transmitted packet and a reception time of the response packet and based on a size of the transmitted packet.

26. The content delivery method according to claim 23 or 24;
wherein, if the cache server receives a signal indicating a congestion state of the mobile network from the mobile terminal, the cache server does not transmit the packet for a predetermined period.

27. The content delivery method according to claim 23, comprising:

reading the file corresponding to the requested content from the temporary content accumulation unit;
extracting a stream from the read file, generating a stream by deleting at least part of frames from the stream so that a bit rate of the generated stream does not exceed the bandwidth, and storing the stream in a file; and
transmitting a packet including the file storing the adjusted stream to the mobile terminal while controlling transmission timing based on a buffer capacity of the mobile terminal at least for a certain period.

28. The content delivery method according to claim 27;
wherein, if a bit rate of the file storing the adjusted stream is lower than the bandwidth, the cache server calculates a period that is required for a buffer amount of the mobile terminal to reach the buffer capacity based on the bit rate and the buffer capacity and does not transmit the packet during a period until the buffer amount reaches zero, which period is determined based on the calculated period.

**29.** The content delivery method according to claim 27;

wherein, if a bit rate of the file storing the adjusted stream is equal to the bandwidth, the cache server calculates a period required for a buffer amount of the mobile terminal to reach zero based on a bit rate at which the mobile terminal reproduces a content and on the buffer capacity and does not transmit the packet for the period.

**30.** The content delivery method according to any one of claims 27 to 29;

wherein the cache server reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

**31.** The content delivery method according to any one of claims 27 to 30;

wherein, if the cache server receives a response packet from the mobile terminal in response to a transmitted packet transmitted to the mobile terminal, the cache server estimates the bandwidth of the mobile network based on a difference between a transmission time of the transmitted packet and a reception time of the response packet and based on a size of the transmitted packet.

**32.** The content delivery method according to any one of claims 27 to 30;

wherein, if the cache server receives a signal indicating a congestion state of the mobile network from the mobile terminal, the cache server does not transmit the packet for a predetermined period.


**Amended claims under Art. 19.1 PCT**

**1.** (Amended) A content delivery system, comprising:

a plurality of cache servers on a mobile network;
wherein each of the plurality of cache servers comprises:

a temporary content accumulation unit that temporarily accumulates at least part of contents stored in a delivery server apparatus delivering a content(s) on the Internet;
a determination unit that by using information included in a content request message from a mobile terminal determines which one of the plurality of cache servers accumulates a content requested by the mobile terminal;
a content acquisition unit that reads a file corresponding to the requested content from the determined cache server and outputs the file to the temporary content accumulation unit; and
a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a packet, and transmits the packet to the mobile terminal;
wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

**2.** The content delivery system according to claim 1;

wherein the delivery unit reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

**3.** (Deleted)

**4.** The content delivery system according to claim 1 or 2;

wherein, if the delivery unit receives a signal indicating a congestion state of the mobile network from the mobile terminal, the delivery unit does not transmit the packet for a predetermined period.

**5.** The content delivery system according to claim 1;
wherein the delivery unit estimates the bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the stream in a file, transmits a packet including the file storing the adjusted stream to the mobile terminal while controlling transmission timing based on a buffer capacity of the mobile terminal at least for a certain period.

**6.** The content delivery system according to claim 5;
wherein, if a bit rate of the file storing the adjusted stream is lower than the bandwidth, the delivery unit calculates a period that is required for a buffer amount of the mobile terminal to reach the buffer capacity based on the bit rate and the buffer capacity and does not transmit the packet during a period until the buffer amount reaches zero, which period is determined based on the calculated period.

**7.** The content delivery system according to claim 5;
wherein, if a bit rate of the file storing the adjusted stream is equal to the bandwidth, the delivery unit calculates a period required for a buffer amount of the mobile terminal to reach zero based on a bit rate at which the mobile terminal reproduces a content and on the buffer capacity and does not transmit the packet for the period.

**8.** The content delivery system according to any one of claims 5 to 7;
wherein the delivery unit reads the file corresponding to the requested content from the temporary content accumulation unit in portions, extract a stream from the file divided in portions, and generates a stream by deleting at least one frame whose priority is relatively low from the stream so that a bit rate of the generated stream does not exceed the bandwidth.

**9.** The content delivery system according to any one of claims 5 to 8;
wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

**10.** The content delivery system according to any one of claims 5 to 8;
wherein, if the delivery unit receives a signal indicating a congestion state of the mobile network from the mobile terminal, the delivery unit does not transmit the packet for a predetermined period.

**11.** (Amended) The content delivery system according to any one of claims 1, 2, 4 to 10;
wherein the plurality of cache servers are transparent or fully transparent proxy servers.

**12.** (Amended) The content delivery system according to any one of claims 1, 2, and 4 to 11;
wherein the mobile network is a 3G (3rd Generation) mobile network or an LTE (Long Term Evolution)/EPC (Evolved Packet Core) network.

**13.** (Amended) A cache server, comprising:

a temporary content accumulation unit that temporarily accumulates at least part of contents stored in a delivery server apparatus delivering a content(s) on the Internet;
a determination unit that by using information included in a content request message from a mobile terminal determines which one of the plurality of cache servers on a mobile network accumulates a content requested by the mobile terminal;
a content acquisition unit that reads a file corresponding to the requested content from the determined cache server and outputs the file to the temporary content accumulation unit; and
a delivery unit that estimates a bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the generated stream in a packet, and transmits the packet to the mobile terminal;
wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

14. The cache server according to claim 13;
wherein the delivery unit reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

15. (Deleted)

16. The cache server according to claim 13 or 14;
wherein, if the delivery unit receives a signal indicating a congestion state of the mobile network from the mobile terminal, the delivery unit does not transmit the packet for a predetermined period.

17. The cache server according to claim 13;
wherein the delivery unit estimates the bandwidth of the mobile network based on a predetermined signal from the mobile terminal, reads the file corresponding to the requested content from the temporary content accumulation unit, extracts a stream from the file, generates a stream by deleting at least part of frames from the stream so that a bit rate of the generated stream does not exceed the bandwidth, stores the stream in a file, and transmits a packet including the file storing the adjusted stream to the mobile terminal while controlling transmission timing based on a buffer capacity of the mobile terminal at least for a certain period.

18. The cache server according to claim 17;
wherein, if a bit rate of the file storing the adjusted stream is lower than the bandwidth, the delivery unit calculates a period that is required for a buffer amount of the mobile terminal to reach the buffer capacity based on the bit rate and the buffer capacity and does not transmit the packet during a period until the buffer amount reaches zero, which period is determined based on the calculated period.

19. The cache server according to claim 17;
wherein, if a bit rate of the file storing the adjusted stream is equal to the bandwidth, the delivery unit calculates a period required for a buffer amount of the mobile terminal to reach zero based on a bit rate at which the mobile terminal reproduces a content and on the buffer capacity and does not transmit the packet for the period.

20. The cache server according to any one of claims 17 to 19;
wherein the delivery unit reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

21. The cache server according to any one of claims 17 to 20;
wherein, if the delivery unit receives a response packet from the mobile terminal in response to a transmitted packet transmitted to the mobile terminal, the delivery unit estimates the bandwidth of the mobile network based on a difference between a transmission time of the transmitted packet and a reception time of the response packet and based on a size of the transmitted packet.

22. The cache server according to any one of claims 17 to 20;
wherein, if the delivery unit receives a signal indicating a congestion state of the mobile network from the mobile terminal, the delivery unit does not transmit the packet for a predetermined period.

23. (Amended) A content delivery method, comprising:

by a cache server, temporarily accumulating at least part of contents stored in a delivery server apparatus delivering a content(s) on the Internet in a temporary content accumulation unit provided with the cache server;
by using information included in a content request message from a mobile terminal, determining which one of the plurality of cache servers on a mobile network accumulates a content requested by the mobile terminal;
reading a file corresponding to the requested content from the determined cache server and outputting the file to the temporary content accumulation unit;

estimating a bandwidth of the mobile network based on a predetermined signal from the mobile terminal; reading the file corresponding to the requested content from the temporary content accumulation unit; and extracting a stream from the read file, generating a stream by deleting at least part of frames from the stream so that a bit rate of the generated stream does not exceed the bandwidth, storing the generated stream in a packet, and transmitting the packet to the mobile terminal; wherein, if the cache server receives a response packet from the mobile terminal in response to a transmitted packet transmitted to the mobile terminal, the cache server estimates the bandwidth of the mobile network based on a difference between a transmission time of the transmitted packet and a reception time of the response packet and based on a size of the transmitted packet.

24. The content delivery method according to claim 23; wherein the cache server receives the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

25. (Deleted)

26. The content delivery method according to claim 23 or 24; wherein, if the cache server receives a signal indicating a congestion state of the mobile network from the mobile terminal, the cache server does not transmit the packet for a predetermined period.

27. The content delivery method according to claim 23, comprising:

reading the file corresponding to the requested content from the temporary content accumulation unit; extracting a stream from the read file, generating a stream by deleting at least part of frames from the stream so that a bit rate of the generated stream does not exceed the bandwidth, and storing the stream in a file; and transmitting a packet including the file storing the adjusted stream to the mobile terminal while controlling transmission timing based on a buffer capacity of the mobile terminal at least for a certain period.

28. The content delivery method according to claim 27; wherein, if a bit rate of the file storing the adjusted stream is lower than the bandwidth, the cache server calculates a period that is required for a buffer amount of the mobile terminal to reach the buffer capacity based on the bit rate and the buffer capacity and does not transmit the packet during a period until the buffer amount reaches zero, which period is determined based on the calculated period.

29. The content delivery method according to claim 27; wherein, if a bit rate of the file storing the adjusted stream is equal to the bandwidth, the cache server calculates a period required for a buffer amount of the mobile terminal to reach zero based on a bit rate at which the mobile terminal reproduces a content and on the buffer capacity and does not transmit the packet for the period.

30. The content delivery method according to any one of claims 27 to 29; wherein the cache server reads the file corresponding to the requested content from the temporary content accumulation unit in portions, extracts a stream from the file divided in portions, and generates a stream by deleting at least one frame whose priority is relatively low from the stream so that a bit rate of the generated stream does not exceed the bandwidth.

31. The content delivery method according to any one of claims 27 to 30; wherein, if the cache server receives a response packet from the mobile terminal in response to a transmitted packet transmitted to the mobile terminal, the cache server estimates the bandwidth of the mobile network based on a difference between a transmission time of the transmitted packet and a reception time of the response packet and based on a size of the transmitted packet.

32. The content delivery method according to any one of claims 27 to 30; wherein, if the cache server receives a signal indicating a congestion state of the mobile network from the mobile terminal, the cache server does not transmit the packet for a predetermined period.

# FIG. 1

EP 2 752 772 A1

# FIG. 2

CACHE SERVER 110_1

CONTROL SIGNAL TRANSMISSION AND RECEPTION UNIT 111

CONTENT LIST CREATION UNIT 118

DETERMINATION UNIT 117

COLLECTION UNIT 116

ANALYSIS UNIT 115

CONTENT ACQUISITION UNIT 112

TEMPORARY CONTENT ACCUMULATION UNIT 113

DELIVERY UNIT 114

EP 2 752 772 A1

FIG. 3

DELIVERY UNIT  ~114

TRANSMISSION UNIT  ~200

RECEPTION UNIT  ~201

SELECTION ADJUSTMENT UNIT  ~204

BANDWIDTH ESTIMATION UNIT  ~202

CONTENT OBTAINMENT UNIT  ~203

FIG. 4

# FIG. 5

# FIG. 6

MOBILE LTE/EPC NETWORK — 250

145 — DELIVERY SERVER APPARATUS — 121

290__1 — S/P-GW APPAR-ATUS

260__1 — eNodeB APPARATUS

260__M — eNodeB APPARATUS

PROXY SERVER — 120__1

290__2 — S/P-GW APPAR-ATUS

261__1 — eNodeB APPARATUS

261__M — eNodeB APPARATUS

PROXY SERVER — 120__2

290__N — S/P-GW APPARATUS

262__1 — eNodeB APPARATUS

262__M — eNodeB APPARATUS

PROXY SERVER — 120__N

170 — MOBILE TERMINAL

EP 2 752 772 A1

32

FIG. 7

# FIG. 8

CACHE SERVER — 110_1

CONTROL SIGNAL TRANSMISSION AND RECEPTION UNIT — 111

CONTENT LIST CREATION UNIT — 118

DETERMI-NATION UNIT — 117

COLLEC-TION UNIT — 116

ANALYSIS UNIT — 115

CONTENT ACQUISITION UNIT — 112

TEMPORARY CONTENT ACCUMULATION UNIT — 113

DELIVERY UNIT — 114

EP 2 752 772 A1

# FIG. 9

EP 2 752 772 A1

FIG. 10

EP 2 752 772 A1

FIG. 11

FIG. 12

## INTERNATIONAL SEARCH REPORT

| International application No. |
|---|
| PCT/JP2012/074150 |

### A. CLASSIFICATION OF SUBJECT MATTER
*G06F13/00*(2006.01)i, *H04N7/173*(2011.01)i

According to International Patent Classification (IPC) or to both national classification and IPC

### B. FIELDS SEARCHED

Minimum documentation searched (classification system followed by classification symbols)
G06F13/00, H04N7/173

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2011/049179 A1  (NEC Corp.),<br>28 April 2011 (28.04.2011),<br>paragraphs [0021], [0043] to [0046], [0051],<br>[0059], [0074] to [0076], [0084]<br>(Family: none) | 1-32 |
| A | JP 2000-276425 A  (Toshiba Corp.),<br>06 October 2000 (06.10.2000),<br>paragraph [0057]; fig. 1<br>& US 2005/132049 A1     & EP 1039721 A2 | 1-32 |
| A | JP 2011-123462 A  (Yamaha Corp.),<br>23 June 2011 (23.06.2011),<br>paragraph [0026]<br>& US 2011/0118861 A1     & EP 2334028 A2 | 1-32 |

☒ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    11 December, 2012 (11.12.12) | Date of mailing of the international search report<br>    18 December, 2012 (18.12.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 752 772 A1**

**INTERNATIONAL SEARCH REPORT**

| International application No. |
| --- |
| PCT/JP2012/074150 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2011/064810 A1  (SkillUpJapan Corp.), 03 June 2011 (03.06.2011), paragraph [0033] & JP 2012-504352 A | 1-32 |
| A | JP 2000-224172 A  (Fujitsu Ltd.), 11 August 2000 (11.08.2000), paragraphs [0015] to [0016] & US 6614763 B1          & EP 1026855 A2 | 1-32 |
| A | JP 2006-060802 A  (Microsoft Corp.), 02 March 2006 (02.03.2006), claim 3 & US 2006/0026294 A1    & EP 1622385 A1 & KR 10-2006-0048952 A  & CN 1756369 A | 1-32 |

Form PCT/ISA/210 (continuation of second sheet) (July 2009)

40

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011205465 A
- JP 2011205466 A
- JP 2006171822 A
- JP 2000122951 A